# EUROPEAN PATENT APPLICATION

(11) **EP 4 579 420 A1**
(43) Date of publication of application: **02.07.2025**
(21) Application number: 23881409.9
(22) Date of filing: 18.08.2023
(51) Int. Cl.: G06F 3/04847

(54) **PROMPTING METHOD BASED ON TASK PROCESSING, AND ELECTRONIC DEVICE**

(30) Priority: 25.10.2022 CN 202211311331
(71) Applicant: Honor Device Co., Ltd., Shenzhen, Guangdong 518040 (CN)
(72) Inventor: BAO, Xintong, Shenzhen, Guangdong 518040 (CN)
(74) Representative: Thun, Clemens
(86) International application number: PCT/CN2023/113756
(87) International publication number: WO 2024/087825

(57) **Abstract**

Embodiments of this application provide a task processing-based reminder method and an electronic device. In the method, after a user downloads a file, a floating ball corresponding to the file is displayed on a preview interface of the file, to perform operation guidance for the user. The user may perform an operation on a floating ball option to store the file in a custom storage path, to facilitate subsequent management and implement personalized storage of the file. The floating ball is displayed at the top of the preview interface of the file, so that the user can perform a related operation at any time based on guidance of the floating ball. This improves experience brought by a task guidance prompt to the user.

## Description

This application claims priority to Chinese Patent Application No. 202211311331.8, filed with the China National Intellectual Property Administration on October 25, 2022 and entitled "TASK PROCESSING-BASED REMINDER METHOD AND ELECTRONIC DEVICE", which is incorporated herein by reference in its entirety.

### TECHNICAL FIELD

This application relates to the field of smart terminal technologies, and in particular, to a task processing-based reminder method and an electronic device.

### BACKGROUND

With development of terminal technologies, electronic devices have become indispensable tools in various aspects of people's daily life. Functions of various applications of the electronic devices are also gradually improved, providing users with various intelligent services, and bringing great convenience to the users' work and life.

However, in a process in which a user uses an electronic device, how the electronic device provides a reminder for the user based on task processing to enable the user to conveniently complete a related operation is a problem that urgently needs to be resolved.

### SUMMARY

To resolve the foregoing technical problem, embodiments of this application provide a task processing-based reminder method and an electronic device. In the method, a floating ball displayed at the top is used for performing task guidance for a user, so that the user can perform a related operation at any time based on guidance of the floating ball. This improves experience brought by a task guidance prompt to the user.

According to a first aspect, an embodiment of this application provides a task-based reminder method. The method includes: An electronic device displays a first interface, where the first interface includes a received first file. The electronic device receives a first operation performed on the first interface, where the first operation is used for downloading the first file. The electronic device displays a second interface when downloading of the first file is completed, where the second interface includes a preview interface of the first file and a first floating window, and the first floating window includes a first option. The electronic device stores the first file in a directory of a target folder in response to a second operation performed on the first option, where the target folder is a folder with a custom permission, and the target folder is different from a system folder. The electronic device displays a third interface, where the third interface is an interface of a file management application, and the third interface includes the target folder and the system folder. The electronic device displays the first file in the target file in response to a third operation performed on the target folder.

The first floating window corresponds to the first file, and is used for performing guidance for a related operation for the first file.

It should be noted that the first floating window does not automatically disappear on the preview interface of the first file.

For example, the first operation may be a click/tap operation performed on the first file, and the electronic device may download the first file on an interface of a third-party application based on a click/tap operation of a user. The first operation may alternatively be an operation of clicking/tapping, by the user, a menu of the first file and clicking/tapping a save button in the menu, and the electronic device downloads the first file based on the operation manually performed by the user to save the first file.

For example, the first option may be a button for separately storing the first file, such as "Copy to", "Save as", or "Move to". The second operation may be an operation of clicking/tapping the first option, or an operation of double-clicking/tapping the first option to confirm selection of the first option.

For example, the third operation is an operation of viewing the target folder.

The system folder is a default save directory of a file of a third-party application. A file received by a terminal device through the third-party application may be saved to a directory of the system folder based on a default path. Usually, a default path of a third-party application is complex and obscure, and it is difficult for a common user to understand the default path. The target folder is different from the system folder. Both the target folder and the system folder are displayed on the interface of the file management application. The user has a custom permission on the target folder. For example, the user may perform an operation in the target folder to create a folder, delete a folder, or rename a folder, and may further establish a multi-level subdirectory as needed. The target folder may be named "My folder", "My files", or the like. The user may store the first file in a custom path in the target folder. When opening the interface of the file management application, the user can find a required file based on the custom path in the target folder. In the method, file searching can be implemented without requiring the user to understand an obscure and complex default path. This makes file searching more convenient and faster, and improves user experience.

Floating balls displayed on preview interfaces of different files correspond to different files, and are used for guiding the user to perform related operations on corresponding files. To be specific, a floating window corresponding to the first file is displayed on the preview interface of the first file, and is used for guiding the user to perform an operation related to the first file; and a floating window corresponding to a second file is displayed on a preview interface of the second file, and is used for guiding the user to perform an operation related to the second file.

In this way, after the user downloads a file, a floating window corresponding to the file is displayed on a preview interface of the file, to perform operation guidance for the user. The user may perform an operation on a floating window option to save the file to a custom storage path, to facilitate subsequent management and implement personalized storage of the file. The floating window is displayed at the top of the preview interface of the file, so that the user does not need to complete a related consideration and perform a related operation within short time, and only needs to perform a related operation according to guidance of a function option in a floating ball when necessary. This avoids a problem that the user does not know how to perform a related operation on the file because the user cannot find guidance of a function option.

According to the first aspect, the method further includes: The electronic device closes the preview interface of the first file in response to a fourth operation performed on the preview interface of the first file, and cancels displaying of the first floating window.

For example, the fourth operation is an operation of closing the preview interface.

In this way, the first floating window corresponding to the first file disappears only when the preview interface of the first file is closed. This avoids a problem that the user does not know how to perform a related operation on the file because the user cannot find guidance of a function option.

According to any one of the first aspect or the foregoing implementations of the first aspect, after the displaying of the first floating window is canceled, the method further includes: The electronic device displays a fourth interface in response to a fifth operation performed on the first file, where the fourth interface includes the preview interface of the first file and the first floating window.

For example, the fifth operation may be an operation of opening the first file in a third-party application.

Therefore, after the first file is opened again, the first floating window corresponding to the first file is still displayed, to perform operation guidance for the user.

According to any one of the first aspect or the foregoing implementations of the first aspect, the first floating window is a first floating ball.

According to any one of the first aspect or the foregoing implementations of the first aspect, an initial form of the first floating ball is a folded state, and the method further includes: The electronic device adjusts a form of the first floating ball to an unfolded state in response to a sixth operation performed on the first floating ball, where when the first floating ball is in the unfolded state, the first option is displayed on the first floating ball.

For example, the sixth operation may be a click/tap operation.

In this way, an initial form of a floating ball corresponding to a file is a folded state, and the floating ball occupies a small area on a terminal interface, without interrupting experience of viewing the file by the user.

According to any one of the first aspect or the foregoing implementations of the first aspect, a form of the first floating ball is adjusted from the unfolded state to the folded state in response to a seventh operation performed on the first floating ball, or a received eighth operation, or no user operation being received within specified time.

In this way, a form of a floating ball used for performing operation guidance for the user can be adjusted according to a user requirement, without affecting viewing of file preview content by the user.

According to any one of the first aspect or the foregoing implementations of the first aspect, the first floating window further includes a second option, and the method further includes: The electronic device displays a fifth interface in response to an eighth operation performed on the second option, where the fifth interface includes the preview interface of the first file and a first share window, the first share window includes icons of a plurality of share objects, and the icons of the plurality of share objects include an icon of a first object. The electronic device sends the first file to the first object in response to a received ninth operation.

For example, the second option may be a Share option.

In this way, the user can pull up a share window through an operation on a share option on a floating ball, and share a file to a target object selected by the user. This implements resource sharing and enriches functions of the terminal. Compared with a process in which the user actively finds a file and then shares the file, the method in which file sharing is implemented by directly pulling up a share window through an operation on a share option on a floating ball in this embodiment makes operations more convenient and faster, improves efficiency of resource sharing, and improves user experience.

According to any one of the first aspect or the foregoing implementations of the first aspect, the first floating window further includes a third option, and the method further includes: The electronic device displays a sixth interface in response to a ninth operation performed on the third option, where the sixth interface includes a print preview interface of the first file and a print option; and in response to a tenth operation performed on the print option, sends, to a printing device, an instruction for printing the first file.

For example, the third option may be a Print option.

In this way, the user can pull up a print preview interface through an operation on a print option on a floating ball, and complete a print operation on a related file. Compared with a method in which the user completes a file print operation based on a share window, the method in which file printing is completed by directly pulling up a print window through an operation on a print option on a floating ball in this embodiment makes operations more convenient and faster, improves efficiency of file printing, and improves user experience.

According to any one of the first aspect or the foregoing implementations of the first aspect, the first floating window further includes a fourth option, and the method further includes: The electronic device displays a seventh interface in response to a tenth operation performed on the fourth option, where the seventh interface includes the preview interface of the first file and prompt information, and the prompt information is used for indicating that the first file has been stored to a desktop card. The electronic device displays a desktop in response to a received eleventh operation, where the desktop includes a desktop card, and the desktop card includes an icon control of the first file. The electronic device displays the preview interface of the first file in response to a twelfth operation performed on the icon control of the first file.

For example, the fourth option may be a Save to desktop option.

In this way, the user can add a file to a file management card on the desktop through an operation on a Save to desktop option on a floating ball. Therefore, when the user subsequently wants to view file content, the user does not need to open a corresponding third-party application again to search for a corresponding file, and can directly click/tap a file icon in the file management card on the desktop to view the file content. This makes operations more convenient and faster, and improves user experience.

According to any one of the first aspect or the foregoing implementations of the first aspect, the first interface is an interface of a third-party application.

According to any one of the first aspect or the foregoing implementations of the first aspect, the method further includes: The electronic device displays an eighth interface, where the eighth interface includes a schedule reminder notification, and the schedule reminder notification includes schedule information and a fifth option. In response to a thirteenth operation performed on the fifth option, the electronic device cancels displaying of the schedule reminder notification, and displays a second floating window, where the second floating window includes a sixth option. The electronic device displays a ninth interface in response to a fourteenth operation performed on the sixth option, where the ninth interface is used for performing an item matching the schedule information.

For example, the fifth option may be an Add floating ball option.

The sixth option matches schedule content, and the ninth interface also matches the schedule content. For example, for a meeting schedule, the sixth option may be a Join now option, and the ninth interface may be an interface of a meeting application; and for a ticket booking schedule, the sixth option may be a Buy now option, and the ninth interface may be an interface of a ticket booking application.

Floating balls corresponding to different schedule reminders are used for guiding the user to perform related operations on different schedules. To be specific, a floating window corresponding to a first schedule is used for guiding the user to perform a related operation on the first schedule, and a floating window corresponding to a second schedule is used for guiding the user to perform a related operation on the second schedule.

In this way, the terminal device can provide a schedule reminder for the user by using a floating ball, to guide the user to perform an operation corresponding to the schedule. This makes it more convenient for the user to process a related schedule.

According to any one of the first aspect or the foregoing implementations of the first aspect, the method further includes: The electronic device cancels displaying of the second floating window in response to the fourteenth operation performed on the sixth option.

According to any one of the first aspect or the foregoing implementations of the first aspect, the second floating window includes a seventh option, and the method further includes: The electronic device displays a tenth interface in response to a fifteenth operation performed on the seventh option, where the tenth interface includes the schedule information and a second share window, the second share window includes icons of a plurality of share objects, and the icons of the plurality of share objects include an icon of a second object. The electronic device sends the schedule information to the second object in response to a received sixteenth operation.

For example, the seventh option may be a Share option.

In this way, the user can pull up a share window through an operation on a share option on a floating ball, and share a schedule to a target object selected by the user. This implements schedule sharing and enriches functions of the terminal. Compared with a process in which the user actively finds a schedule and then shares the schedule, the method in which schedule sharing is implemented by directly pulling up a share window through an operation on a share option on a floating ball in this embodiment makes operations more convenient and faster, improves efficiency of resource sharing, and improves user experience.

According to any one of the first aspect or the foregoing implementations of the first aspect, the method further includes: The electronic device cancels displaying of the second floating window in response to the fifteenth operation performed on the seventh option.

According to any one of the first aspect or the foregoing implementations of the first aspect, the method further includes: The electronic device cancels displaying of the second floating window in response to the fifteenth operation performed on the seventh option. The electronic device continues to display the second floating window after the schedule information is sent to the second object.

According to any one of the first aspect or the foregoing implementations of the first aspect, the second floating window includes an eighth option, and the method further includes: The electronic device cancels displaying of the second floating window in response to a sixteenth operation performed on the eighth option.

For example, the eighth option is a Cancel option.

According to any one of the first aspect or the foregoing implementations of the first aspect, the schedule reminder notification includes schedule reminder information displayed in a form of an alarm clock, schedule reminder information displayed in a form of a banner notification, and schedule notification information displayed in a notification center or on a lock screen interface.

According to any one of the first aspect or the foregoing implementations of the first aspect, the schedule information includes: meeting schedule information, entertainment schedule information, and transaction schedule information.

For example, the entertainment schedule information may include a schedule of watching a movie or a television play or a schedule of watching live streaming.

For example, the transaction schedule information may include a ticket booking schedule.

According to any one of the first aspect or the foregoing implementations of the first aspect, the second floating window is a second floating ball, an initial form of the second floating ball is a folded state, and the method further includes: The electronic device adjusts a form of the second floating ball to an unfolded state in response to a seventeenth operation performed on the second floating ball, where when the second floating ball is in the unfolded state, the sixth option is displayed on the first floating ball.

According to any one of the first aspect or the foregoing implementations of the first aspect, the method further includes: In response to the thirteenth operation performed on the fifth option, the electronic device sets a schedule reminder to be performed again N minutes later, where N is a positive integer.

In this way, through one operation, the user can not only enable the terminal device to perform a schedule reminder for the user again N minutes later, but also enable the terminal device to display a floating ball corresponding to the schedule reminder to notify the user of the schedule in real time.

According to a second aspect, an embodiment of this application provides an electronic device. The electronic device includes: one or more processors; a memory; and one or more computer programs, where the one or more computer programs are stored in the memory, and when the computer program is executed by the one or more processors, the electronic device is enabled to perform the task-based reminder method according to any one of the first aspect or the implementations of the first aspect.

Any one of the second aspect or the implementations of the second aspect corresponds to any one of the first aspect or the implementations of the first aspect. For technical effects corresponding to any one of the second aspect or the implementations of the second aspect, refer to the technical effects corresponding to any one of the first aspect or the implementations of the first aspect. Details are not described herein again.

According to a third aspect, an embodiment of this application provides a computer-readable storage medium. The computer-readable storage medium includes a computer program. When the computer program is run on an electronic device, the electronic device is enabled to perform the task-based reminder method according to any one of the first aspect or the implementations of the first aspect.

Any one of the third aspect or the implementations of the third aspect corresponds to any one of the first aspect or the implementations of the first aspect. For technical effects corresponding to any one of the third aspect or the implementations of the third aspect, refer to the technical effects corresponding to any one of the first aspect or the implementations of the first aspect. Details are not described herein again.

According to a fourth aspect, an embodiment of this application provides a computer program product, including a computer program. When the computer program is run, a computer is enabled to perform the task-based reminder method according to any one of the first aspect or the implementations of the first aspect.

Any one of the fourth aspect or the implementations of the fourth aspect corresponds to any one of the first aspect or the implementations of the first aspect. For technical effects corresponding to any one of the fourth aspect or the implementations of the fourth aspect, refer to the technical effects corresponding to any one of the first aspect or the implementations of the first aspect. Details are not described herein again.

According to a fifth aspect, this application provides a chip. The chip includes a processing circuit and a transceiver pin. The transceiver pin and the processing circuit communicate with each other through an internal connection path. The processing circuit performs the task-based reminder method according to any one of the first aspect or the implementations of the first aspect, to control a receive pin to receive a signal, and control a transmit pin to send a signal.

Any one of the fifth aspect or the implementations of the fifth aspect corresponds to any one of the first aspect or the implementations of the first aspect. For technical effects corresponding to any one of the fifth aspect or the implementations of the fifth aspect, refer to the technical effects corresponding to any one of the first aspect or the implementations of the first aspect. Details are not described herein again.

### BRIEF DESCRIPTION OF DRAWINGS

FIG. 1 is a diagram of an example hardware structure of an electronic device;
FIG. 2 is a diagram of an example software structure of an electronic device;
FIG. 3A is a diagram of an example application scenario;
FIG. 3B is a diagram of an example application scenario;
FIG. 4 is a diagram of an example application scenario;
FIG. 5 is a diagram of an example application scenario;
FIG. 6A and FIG. 6B are diagrams of examples of adjusting a form of a floating ball;
FIG. 7 is a diagram of an example of adjusting a position of a floating ball;
FIG. 8A and FIG. 8B are diagrams of example scenarios in which a floating ball disappears;
FIG. 9 is a diagram of an example application scenario;
FIG. 10A to FIG. 10D are diagrams of example application scenarios of a floating ball;
FIG. 11 is a diagram of an example of creating a schedule;
FIG. 12 is a diagram of an example schedule reminder;
FIG. 13A to FIG. 13E are diagrams of examples of adding a floating ball;
FIG. 14 is a diagram of an example application scenario;
FIG. 15A to FIG. 15C are diagrams of examples of adjusting a form of a floating ball;
FIG. 16A to FIG. 16D are diagrams of example application scenarios of a floating ball;
FIG. 17 is a diagram of an example application scenario;
FIG. 18 is a diagram of an example application scenario; and
FIG. 19 is a diagram of an example application scenario.

### DESCRIPTION OF EMBODIMENTS

The following clearly and completely describes the technical solutions in embodiments of this application with reference to the accompanying drawings in embodiments of this application. It is clear that described embodiments are only some of embodiments of this application rather than all of embodiments. All other embodiments obtained by a person of ordinary skill in the art based on embodiments of this application without creative efforts shall fall within the protection scope of this application.

The term "and/or" in this specification describes only an association relationship between associated objects and represents that three relationships may exist. For example, A and/or B may represent the following three cases: Only A exists, both A and B exist, and only B exists.

In this specification and the claims of embodiments of this application, the terms "first", "second", and the like are intended to distinguish between different objects but not to indicate a particular order of the objects. For example, a first target object, a second target object, and the like are intended to distinguish between different target objects but not to indicate a particular order of the target objects.

In embodiments of this application, the term "example", "for example", or the like is used to give an example, an illustration, or a description. Any embodiment or design scheme described by using "example" or "for example" in embodiments of this application should not be construed as being more preferred or advantageous than another embodiment or design scheme. To be precise, the term "example", "for example", or the like is intended to present a related concept in a specific manner.

In descriptions of embodiments of this application, "a plurality of" means two or more, unless otherwise specified. For example, a plurality of processing units mean two or more processing units, and a plurality of systems mean two or more systems.

A task processing-based reminder method provided in embodiments of this application may be applied to a terminal device such as a mobile phone, a tablet computer, a wearable device, an in-vehicle device, an augmented reality (augmented reality, AR)/virtual reality (virtual reality, VR) device, a notebook computer, an ultra-mobile personal computer (ultra-mobile personal computer, UMPC), a netbook, or a personal digital assistant (personal digital assistant, PDA). A specific type of the terminal device is not limited in embodiments of this application. For ease of description, a mobile phone is used as an example for description in the following application scenarios.

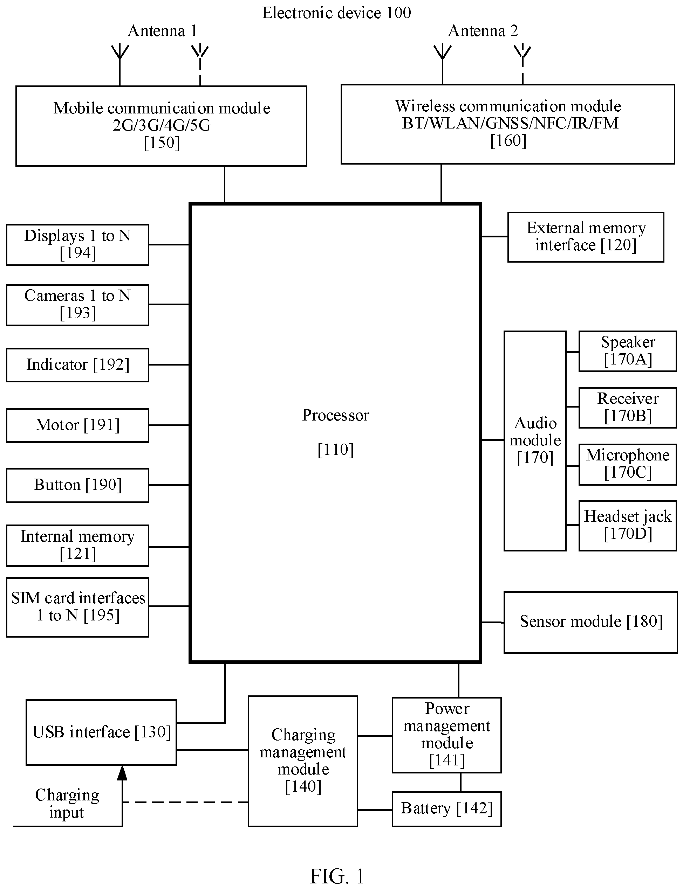

FIG. 1 is a diagram of a structure of an electronic device 100. Optionally, the electronic device 100 may be a terminal, and may also be referred to as a terminal device. The terminal may be an electronic device such as a cellular phone (cellular phone) or a tablet computer (pad). This is not limited in this application. It should be understood that the electronic device 100 shown in FIG. 1 is merely an example of an electronic device, and the electronic device 100 may have more or fewer components than those shown in the figure, may combine two or more components, or may have a different component configuration. The components shown in FIG. 1 may be implemented in hardware that includes one or more signal processors and/or application-specific integrated circuits, software, or a combination of hardware and software.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor, a gyroscope sensor, an acceleration sensor, a temperature sensor, a motion sensor, a barometric pressure sensor, a magnetic sensor, a distance sensor, an optical proximity sensor, a fingerprint sensor, and a touch sensor, an ambient light sensor, a bone conduction sensor, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be separate components, or may be integrated into one or more processors.

The controller may be a nerve center and a command center of the electronic device 100. The controller may generate an operation control signal based on an instruction operation code and a time sequence signal, to control instruction fetching and instruction execution.

A memory may be further disposed in the processor 110 to store instructions and data. In some embodiments, the memory in the processor 110 is a cache.

The USB interface 130 is an interface that complies with a USB standard specification, and may be specifically a mini USB interface, a micro USB interface, a USB Type-C interface, or the like. The USB interface 130 may be configured to connect to a charger to charge the electronic device 100, or may be used for data transmission between the electronic device 100 and a peripheral device, or may be configured to connect to a headset for playing audio through the headset. The interface may alternatively be configured to connect to another electronic device, for example, an AR device.

The charging management module 140 is configured to receive charging input from the charger. The charger may be a wireless charger or a wired charger. In some embodiments of wired charging, the charging management module 140 may receive charging input from a wired charger through the USB interface 130. In some embodiments of wireless charging, the charging management module 140 may receive wireless charging input through a wireless charging coil of the electronic device 100. When the charging management module 140 charges the battery 142, the power management module 141 may further supply power to the electronic device.

The power management module 141 is configured to connect to the battery 142, the charging management module 140, and the processor 110. The power management module 141 receives input from the battery 142 and/or the charging management module 140, and supplies power to the processor 110, the internal memory 121, an external memory, the display 194, the camera 193, the wireless communication module 160, and the like.

A wireless communication function of the electronic device 100 may be implemented by the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna of the electronic device 100 may be configured to cover one or more communication bands. Different antennas may be further multiplexed to improve antenna utilization. For example, the antenna 1 may be multiplexed as a diversity antenna of a wireless local area network. In some other embodiments, the antenna may be used with a tuning switch.

The mobile communication module 150 may provide a solution applied to the electronic device 100 for wireless communication such as 2G/3G/4G/5G. The mobile communication module 150 may include at least one filter, a switch, a power amplifier, a low noise amplifier (low noise amplifier, LNA), and the like.

The wireless communication module 160 may provide a solution applied to the electronic device 100 for wireless communication such as a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, or an infrared (infrared, IR) technology.

In some embodiments, in the electronic device 100, the antenna 1 is coupled to the mobile communication module 150, and the antenna 2 is coupled to the wireless communication module 160, so that the electronic device 100 can communicate with a network and another device through a wireless communication technology.

The electronic device 100 implements a display function through the GPU, the display 194, the application processor, and the like. The GPU is a microprocessor for image processing and is connected to the display 194 and the application processor. The GPU is configured to perform mathematical and geometric computing for graphics rendering. The processor 110 may include one or more GPUs, and the GPU executes program instructions to generate or change displayed information.

The display 194 is configured to display an image, a video, and the like. The display 194 includes a display panel. In some embodiments, the electronic device 100 may include one or N displays 194, where N is a positive integer greater than 1.

The electronic device 100 may implement a photographing function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into an image visible to naked eyes. The ISP may further perform algorithm optimization on noise, brightness, and complexion of the image. The ISP may further optimize parameters such as exposure and color temperature of a photographing scene. In some embodiments, the ISP may be disposed in the camera 193.

The camera 193 is configured to capture a still image or a video. An optical image is generated for an object through the lens and is projected to the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format, for example, RGB or YUV. In some embodiments, the electronic device 100 may include one or N cameras 193, where N is a positive integer greater than 1.

The external memory interface 120 may be configured to connect to an external storage card such as a micro SD card, to extend a storage capability of the electronic device 100. The external storage card communicates with the processor 110 through the external memory interface 120, to implement a data storage function.

The internal memory 121 may be configured to store computer-executable program code. The executable program code includes instructions. The processor 110 runs the instructions stored in the internal memory 121, to implement various functional applications and data processing of the electronic device 100. For example, the electronic device 100 is enabled to implement the task processing-based reminder method in embodiments of this application. The internal memory 121 may include a program storage area and a data storage area. The program storage area may store an operating system, an application required by at least one function (for example, a sound playing function or an image playing function), and the like. The data storage area may store data (for example, audio data and an address book) and the like created during use of the electronic device 100. In addition, the internal memory 121 may include a highspeed random access memory, and may further include a nonvolatile memory, for example, at least one disk storage device, a flash memory device, or a universal flash storage (universal flash storage, UFS).

The electronic device 100 may implement an audio function such as music playing or recording through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to encode and decode an audio signal. In some embodiments, the audio module 170 may be disposed in the processor 110, or some functional modules of the audio module 170 are disposed in the processor 110.

The speaker 170A, also referred to as a "loudspeaker", is configured to convert an electrical audio signal into a sound signal. The electronic device 100 may be configured to listen to music or answer a hands-free call through the speaker 170A. In some embodiments, a plurality of speakers 170A may be disposed in the electronic device 100.

The receiver 170B, also referred to as an "earpiece", is configured to convert an electrical audio signal into a sound signal. When the electronic device 100 is configured to answer a call or receive a voice message, the receiver 170B may be put close to a human ear to receive a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to capture a sound signal and implement a noise reduction function. In some other embodiments, three, four, or more microphones 170C may alternatively be disposed in the electronic device 100, to capture a sound signal, implement noise reduction, recognize a sound source, implement a directional recording function, and the like.

The headset jack 170D is configured to connect to a wired headset. The headset jack 170D may be the USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

Specifically, in the technical solutions provided in embodiments of this application, the sensor module 180 needs to include at least a touch sensor and a pressure sensor.

The pressure sensor is configured to sense a pressure signal, and convert the pressure signal into an electrical signal. In some implementations, the pressure sensor may be disposed on the display 194. There are many types of pressure sensors, such as a resistive pressure sensor, an inductive pressure sensor, and a capacitive pressure sensor. The capacitive pressure sensor may include at least two parallel plates made of a conductive material. When a force is applied to the pressure sensor, a capacitance between electrodes changes. The electronic device 100 determines strength of pressure based on the change in the capacitance. When a touch operation is performed on the display 194, the electronic device 100 detects strength of the touch operation through the pressure sensor. The electronic device 100 may also calculate a touch position based on a detection signal of the pressure sensor. In some embodiments, touch operations that are performed at a same touch position but have different touch operation strength may correspond to different operation instructions.

The touch sensor is also referred to as a "touch panel". The touch sensor may alternatively be disposed on the display 194, and the touch sensor and the display 194 form a touchscreen, which is also referred to as a "touch control screen". The touch sensor is configured to detect a touch operation performed on or near the touch sensor. The touch sensor may transmit the detected touch operation to the application processor, to determine a touch event type, which may include, for example, touch event types such as sliding, tapping, and touching-and-holding. Visual output related to the touch operation may be provided by the display 194. In some other implementations, the touch sensor may alternatively be disposed on a surface of the electronic device 100, and is located at a position different from that of the display 194. Specifically, in the technical solutions provided in embodiments of this application, when a user touches or taps the touchscreen, the touch sensor detects an operation behavior of the user. The electronic device 100 receives data captured by the touch sensor on the touchscreen, and performs a matching operation in response to the operation behavior.

In the electronic device 100, the gyroscope sensor may be configured to determine a motion posture of the electronic device 100. In some embodiments, an angular velocity of the electronic device 100 around three axes (to be specific, x, y, and z axes) may be determined by the gyroscope sensor. The acceleration sensor may detect a magnitude of an acceleration of the electronic device 100 in each direction (usually along three axes). When the electronic device 100 is stationary, the acceleration sensor may detect a magnitude and a direction of gravity. The acceleration sensor may be further configured to recognize a posture of the electronic device, and is applied to applications such as landscape/portrait mode switching and a pedometer.

The button 190 includes a power button (or referred to as a power-on button), a volume button, and the like. The button 190 may be a mechanical button or a touch button. The electronic device 100 may receive button input, and generate button signal input related to user settings and function control of the electronic device 100.

The motor 191 may generate a vibration prompt. The motor 191 may be configured to provide an incoming call vibration prompt or a touch vibration feedback. For example, touch operations performed on different applications (for example, photographing and audio playing) may correspond to different vibration feedback effects.

The indicator 192 may be an indicator light, and may be configured to indicate a charging status or a battery level change, or may be configured to indicate a message, a missed call, a notification, and the like.

A software system of the electronic device 100 may use a layered architecture, an event-driven architecture, a micro kernel architecture, a micro service architecture, or a cloud architecture. In embodiments of this application, an Android system with a layered architecture is used as an example to describe a software structure of the electronic device 100.

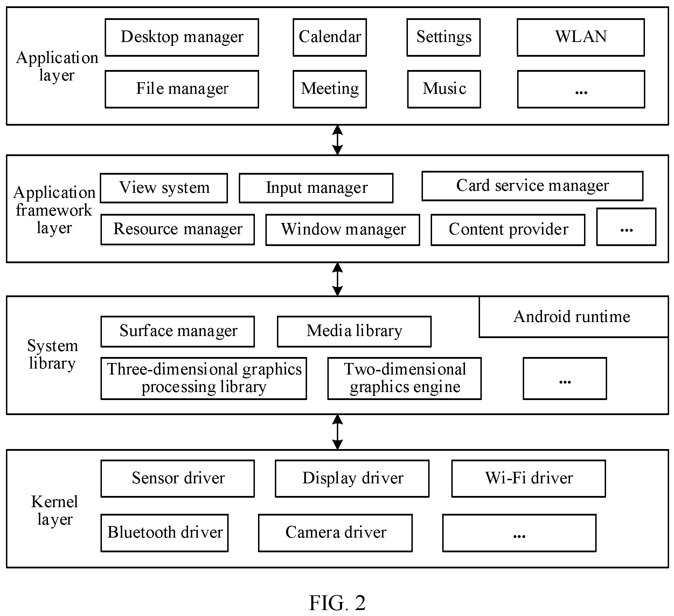

FIG. 2 is a block diagram of a software structure of an electronic device 100 according to an embodiment of this application.

In a layered architecture of the electronic device 100, software is divided into several layers, and each layer has a clear role and responsibility. The layers communicate with each other through a software interface. In some embodiments, an Android system is divided into four layers: an application layer, an application framework layer, Android runtime (Android Runtime) and a system library, and a kernel layer from top to bottom.

The application layer may include a series of application packages.

As shown in FIG. 2, the application packages may include applications such as Desktop Manager, File Manager, Calendar, Meeting, Settings, Music, and WLAN. Examples are not listed one by one herein. This is not limited in this application.

The Desktop Manager may be configured to manage and display icons of applications installed on the electronic device. The File Manager application may be configured to implement uniform management on files in an operating system, including but not limited to uniform management on files such as pictures, audio, documents, videos, and compressed packages. The Settings application may be configured to provide a user with an operation entry corresponding to related settings.

In addition, the application packages may further include applications such as Camera, Gallery, Bluetooth, Phone, Map, Navigation, Music, Videos, and Messages.

The application framework layer provides an application programming interface (application programming interface, API) and a programming framework for the applications at the application layer. The application framework layer includes some predefined functions. In some implementations, these programming interfaces and programming frameworks may be described as functions.

As shown in FIG. 2, the application framework layer may include functions such as a view system, a content provider, a resource manager/file resource manager, a window manager, an input manager, and a card service manager. Examples are not listed one by one herein. This is not limited in this application.

The view system includes a visual control such as a text display control or an image display control. The view system may be configured to construct an application. A display interface may include one or more views.

The content provider is configured to store and obtain data, and enable the data to be accessed by an application. The data may include a video, an image, audio, calls that are made and answered, a browsing history, a bookmark, an address book, and the like.

During actual application, there may be one resource manager and one file resource manager. In FIG. 2, the resource manager is used as an example. Specifically, the resource manager is configured to provide various resources for an application, for example, a localized character string, an icon, a picture, a layout file, and a video file.

The window manager is configured to manage a window application. The window manager may obtain a size of a display, determine whether a status bar exists, perform screen locking, take a screenshot, and the like.

The input manager is configured to manage touch events and distribute the touch events.

The card service manager is configured to perform related management on desktop cards, including but not limited to creating, modifying, and deleting a desktop card, and the like.

The Android runtime includes a kernel library and a virtual machine. The Android runtime is responsible for scheduling and managing the Android system.

The kernel library includes two parts: One part is a performance function that the Java language needs to invoke, and the other part is a kernel library of Android.

The application layer and the application framework layer run in the virtual machine. The virtual machine executes Java files of the application layer and the application framework layer as binary files. The virtual machine is configured to perform functions such as object lifecycle management, stack management, thread management, security and exception management, and garbage collection.

The system library may include a plurality of functional modules, for example, a surface manager (surface manager), a media library (Media Libraries), a three-dimensional (3D) graphics processing library (for example, OpenGL ES), and a two-dimensional (2D) graphics engine (for example, SGL).

The surface manager is configured to manage a display subsystem and provide fusion of 2D and 3D layers for a plurality of applications.

The media library supports playing and recording for a plurality of commonly used audio and video formats, static image files, and the like. The media library may support a plurality of audio and video encoding formats, such as MPEG-4, H.264, MP3, AAC, AMR, JPG, and PNG.

The three-dimensional graphics processing library is configured to implement three-dimensional graphics drawing, image rendering, composition, layer processing, and the like.

It can be understood that the 2D graphics engine is a drawing engine for 2D drawing.

In addition, it can be understood that the kernel layer in the Android system is a layer between hardware and software. The kernel layer includes at least a display driver, a camera driver, a sensor driver, a Wi-Fi driver, a Bluetooth driver, and the like.

It can be understood that the layers in the software structure shown in FIG. 2 and the components included in the layers do not constitute a specific limitation on the electronic device 100. In some other embodiments of this application, the electronic device 100 may include more or fewer layers than those shown in the figure, and each layer may include more or fewer components. This is not limited in this application.

It can be understood that, to implement the task processing-based reminder method in embodiments of this application, the electronic device includes corresponding hardware and/or software modules for performing the functions. Algorithm steps in examples described with reference to embodiments disclosed in this specification can be implemented by hardware or a combination of hardware and computer software in this application. Whether a function is performed by hardware or hardware driven by computer software depends on particular applications and design constraints of the technical solutions. A person skilled in the art may use different methods to implement the described functions of each particular application with reference to the embodiments, but it should not be considered that the implementation goes beyond the scope of this application.

The task processing-based reminder method provided in embodiments of this application is described below with reference to a file management scenario and a schedule reminder management scenario separately.

### (1) File management scenario

Usually, people transmit information through different APPs, for example, may send files such as documents, audio, videos, pictures, audio, installation packages, and compressed packages through third-party APPs such as chat APPs and mail APPs. In a conventional Android system, a path used by a terminal device to store a received file is complex and obscure, and save paths of files received by different APPs may not be the same.

Assuming that a user needs to find a file named "Document 1" received in a chat APP, the user needs to know a default file save path of the chat APP in the Android system. For example, the default file save path of the chat APP in the Android system is Android>Data>com.tencent.mm>MicroMsg>Download. In this case, the user may perform a multi-level search in a file management APP of the terminal device based on the default file save path of the chat APP in the Android system, to find the file "Document 1" needed by the user.

If the user does not know the default file save path of the chat APP in the Android system, it is quite difficult to find a file needed by the user. Consequently, it is difficult to find a file, and user experience is poor. Therefore, to facilitate searches for some files needed by the user on the terminal device, the user usually stores these files based on a custom file save path. In an implementation, a directory "My files" (which may also be named "My folder") is added in the file management APP, so that the user can store, based on a custom file save path, files received by various third-party APPs. The user may add folders or files in the target "My files", and perform operations such as sorting, sharing, uploading to a cloud disk, deletion, and multi-selection on the files or the folders. A file type includes but is not limited to a picture, a video, a document, audio, a compressed package, and the like. For example, the user may directly store the file "Document 1" in "My files", and may store the file "Document 1" in any folder in the directory "My files".

In a possible implementation, the user may store a related file in "My files" based on an automatic prompt on the terminal device.

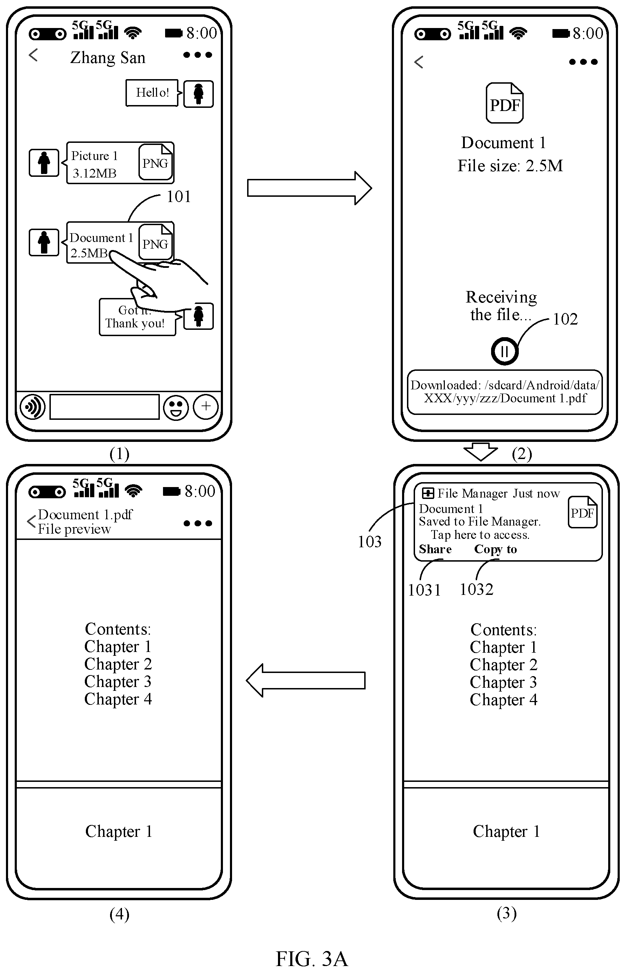

An example in which the user receives a file through a Chat 1 APP is used. On an interface shown in (1) in FIG. 3A, when the other party sends a file named "Document 1", the user taps a control 101 of the file on the chat interface, and a system automatically downloads the file (or the system starts to download the file after the user taps a "Receive file" control corresponding to the file). In addition, a download progress identifier 102 shown in (2) in FIG. 3A is displayed on the interface, to display a download progress of the current document. When the file downloading is completed, the interface may further display a reminder message indicating that the downloading is completed and a download path, for example, a reminder message "Downloaded: /sdcard/Android/data/XXX/yyy/zzz/Document 1.pdf" shown in (2) in FIG. 3A, and the reminder message disappears after a few seconds. When the file downloading is completed, the terminal device automatically displays a preview interface of the file, as shown in (3) in FIG. 3A. When the file is opened for the first time, a banner notification 103 shown in (3) in FIG. 3A may be further displayed on the preview interface of the file. The banner notification 103 is used for notifying the user that the file has been saved to the file management APP, and a save path of the file is a default file save path corresponding to the Chat 1 APP. Still refer to the banner notification 103. The banner notification 103 may include a "Share" control 1031 and a "Copy to" control 1032. The user may tap the "Share" control 1031 to share the file, and the user may tap the "Copy to" control 1032 to copy the file and store the file to a custom file directory (for example, a directory related to "My files"). Optionally, the banner notification 103 may further display one or more of the following information of a received file: an icon, a name, a type, a source, a size, and the like. If the user performs no operation on the banner notification 103 at this time, the banner notification 103 automatically disappears after a period of time. For example, if no operation is performed on the banner notification 103 within five seconds, the banner notification 103 disappears, and is folded to a pull-down notification bar (or referred to as a notification center). The interface directly displays content of Document 1, as shown in (4) in FIG. 3A.

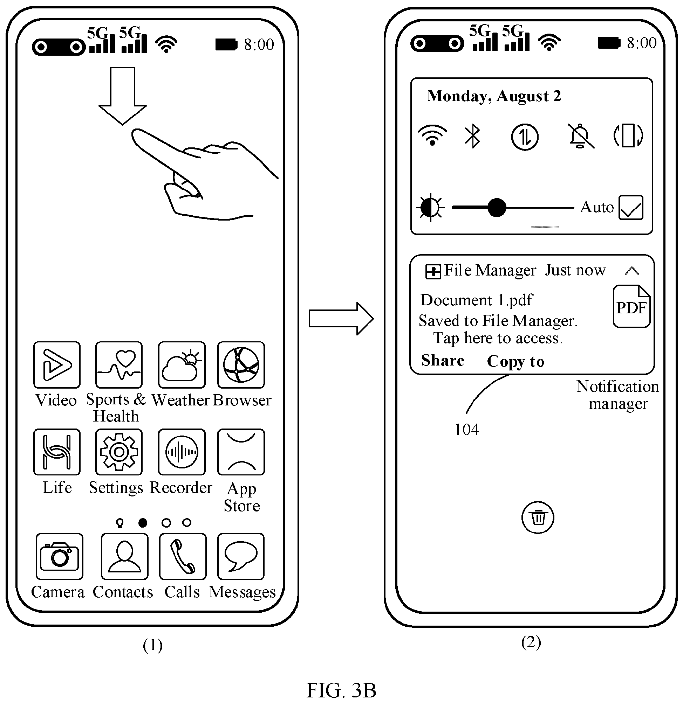

After the banner notification 103 disappears on the preview interface of the file, the user may further find the corresponding banner notification 103 in the notification bar. Still refer to (1) in FIG. 3B. On a main interface of the terminal device, the user performs a pull-down operation at the top of the interface to open the notification bar. The notification bar includes a floating window 104 of a notification message of Document 1 that has just been received. When the floating window 104 of the notification message of Document 1 is unfolded and displayed, the "Share" control and the "Copy to" control shown in (2) in FIG. 3B are displayed in the floating window 104 of the notification message of Document 1. In this case, the user may also separately perform operations on the "Share" control and the "Copy to" control in the floating window of the notification message of Document 1 to implement sharing and custom storage of Document 1 (for example, store Document 1 in a directory related to "My files").

In the foregoing implementation, a banner notification corresponding to a file is displayed only when the file is opened for the first time, to guide the user to perform a related operation (for example, "Share" or "Copy to"), and the banner notification automatically disappears after being displayed for several seconds. First, the displaying of the banner notification corresponding to the file interrupts experience of viewing the file by the user for the first time. The displaying of the banner notification is abrupt, and the user may be unable to complete a related consideration or perform a related operation within short time within which the banner notification is displayed. It is quite possible that the banner notification has disappeared when the user needs to perform a related operation guided by the banner notification. The banner notification corresponding to the file is not re-displayed when the user opens the file again. Although the banner notification is added to the notification center after disappearing, most users do not know how to find the banner notification corresponding to the file again to perform a related operation. Therefore, although this implementation can guide the user to share a file or implement personalized storage of a file for subsequent management, user experience is poor.

In another possible implementation, the user may manually store a received related file in "My files".

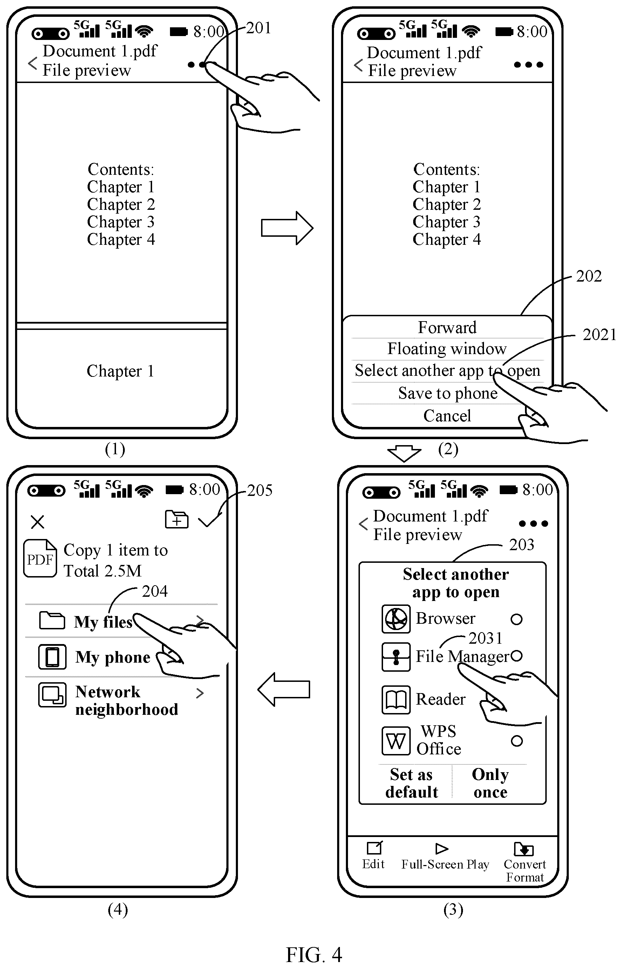

An example in which the user receives a file through the Chat 1 APP is still used. When the file downloading is completed, the terminal device automatically displays a preview interface of the file, as shown in (1) in FIG. 4. On the preview interface of Document 1, the user taps a More options control 201. In response to the tap operation of the user, the terminal device may display an interface shown in (2) in FIG. 4. The interface displays a function option window 202. The function option window 202 may include but is not limited to a "Forward" option, a "Floating window" option, a "Select another app to open" option 2021, a "Save to phone" option, a "Cancel" option, and the like. When the user taps the "Select another app to open" option 2021, a "Select another app to open" window 203 is displayed on the interface of the terminal device in response to the operation of the user. Refer to (3) in FIG. 4. Various applications that can be used to open Document 1 are displayed in the "Select another app to open" window 203, including but not limited to a Browser application, a File Manager application, a Reader application, a WPS Office application, and the like. In this case, the user may select the File Manager application option 2031 to open Document 1 through the File Manager application, so that Document 1 is stored in a directory related to "My files" of the File Manager application. After the user taps the File Manager application option 2031 and confirms the selection (for example, taps a "Set as default" or "Only once" option), the interface of the terminal device switches to an interface of the File Manager application. In this case, refer to (4) in FIG. 4. As shown in (4) in FIG. 4, the user may tap a "My files" option 204 to select a custom storage path for Document 1 level by level, and after the user taps an OK option 205, Document 1 is saved to a corresponding custom directory.

This operation for implementing custom storage of a file in a directory related to "My files" requires the user to be fully familiar with and understand operation steps. In addition, this implementation does not provide any operation guidance, and is not suitable for a novice user or a user with a poor operation capability.

To resolve the foregoing problem and improve user experience, embodiments of this application provide a task processing-based reminder method. In the method, for the file management scenario, the terminal device may prompt the user by using a floating ball, to guide the user to store a file in a directory related to "My files", to facilitate subsequent file management and implement personalized storage of the file.

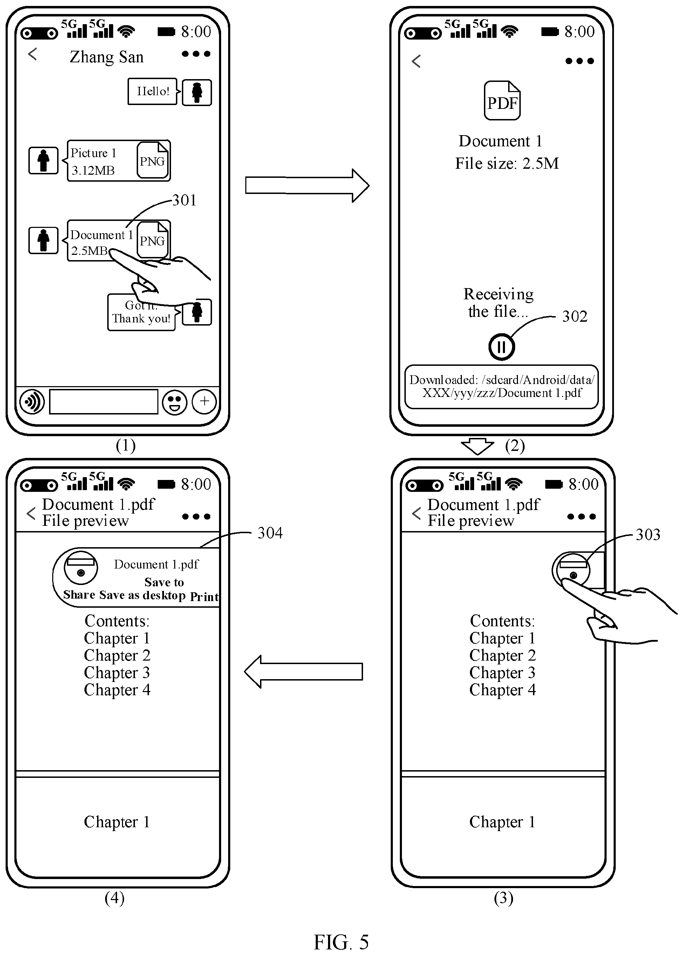

FIG. 5 shows an example application scenario. In the application scenario, an example in which the user receives a file through the Chat 1 APP is still used. The user may complete custom storage of a file according to guidance of a floating ball corresponding to the file.

On an interface shown in (1) in FIG. 5, when the other party sends a file named "Document 1", the user taps a control 301 of the file on the chat interface, and the system automatically downloads the file (or the system starts to download the file after the user taps a "Receive file" control corresponding to the file). In addition, a download progress identifier 302 shown in (2) in FIG. 5 is displayed on the interface, to display a download progress of the current document. When the file downloading is completed, the interface may further display a reminder message indicating that the downloading is completed and a download path, for example, a reminder message "Downloaded: /sdcard/Android/data/XXX/yyy/zzz/Document 1.pdf" shown in (2) in FIG. 5, and the reminder message disappears after a few seconds. When the file downloading is completed, the terminal device automatically displays a preview interface of the file, as shown in (3) in FIG. 5. After "Document 1" is opened, a floating ball 303 corresponding to "Document 1" is displayed on the preview interface of "Document 1". The floating ball corresponding to "Document 1" is used for guiding the user to perform a related operation corresponding to "Document 1". The related operation may include but is not limited to sharing, custom storage (or referred to as Save as), printing, and the like. As shown in (3) in FIG. 5, an initial form in which the floating ball 303 corresponding to "Document 1" is displayed is a folded state, and the floating ball 303 occupies a small area on the interface, without interrupting experience of viewing the file by the user. When the floating ball corresponding to the file is in the folded state, a display interface of the floating ball may include but is not limited to an icon (for example, "File management reminder floating ball") of the floating ball. If the user taps the floating ball 303 corresponding to "Document 1", the floating ball corresponding to "Document 1" changes to an unfolded state. Refer to a floating ball 304 corresponding to "Document 1" in (4) in FIG. 5. When the floating ball corresponding to the file is in the unfolded state, a display interface of the floating ball may include but is not limited to an icon (for example, "File management reminder floating ball") of the floating ball, a name (for example, Document 1.pdf) of the file associated with the floating ball, and various function options. For example, as shown in (4) in FIG. 5, function options displayed on the floating ball may include but are not limited to a "Share" option, a "Save as" option, a "Save to desktop" option, a "Print" option, and the like, to guide the user to perform an operation corresponding to "Document 1". The "Share" option is used for the user to share "Document 1". The "Save as" option is used for the user to implement custom storage of "Document 1". The "Save to desktop" option is used for the user to store "Document 1" in a desktop card of the terminal device. The "Print" option is used for the user to print "Document 1".

As shown in (3) and (4) in FIG. 5, the floating ball 303 and the floating ball 304 corresponding to "Document 1" may be displayed on a right boundary of the interface, or the floating ball 303 and the floating ball 304 corresponding to "Document 1" may be displayed on a left boundary of the interface. This is not limited in this embodiment of this application. Similarly, the floating ball 303 and the floating ball 304 corresponding to "Document 1" may be displayed in an upper half area of the right boundary of the interface, or the floating ball 303 and the floating ball 304 corresponding to "Document 1" may be displayed in a lower half area of the right boundary of the interface. This is not limited in this embodiment of this application either.

A display status of a floating ball corresponding to a file may randomly switch between a folded state and an unfolded state.

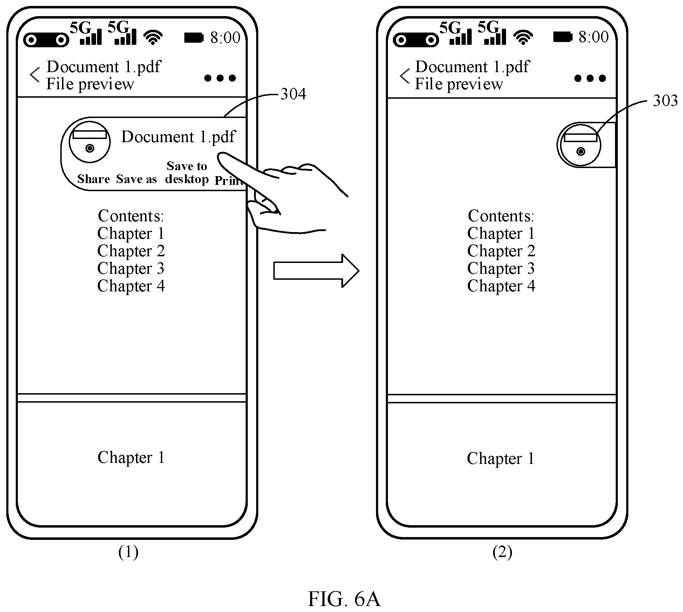

In an optional implementation, as shown in (1) in FIG. 6A, when the user taps the floating ball 304 in the unfolded state, for example, the user taps an icon of the floating ball 304 or the user taps blank space on the floating ball 304, the floating ball 304 in the unfolded state is collapsed to a folded state, as shown by a floating ball 303 displayed on an interface in (2) in FIG. 6A.

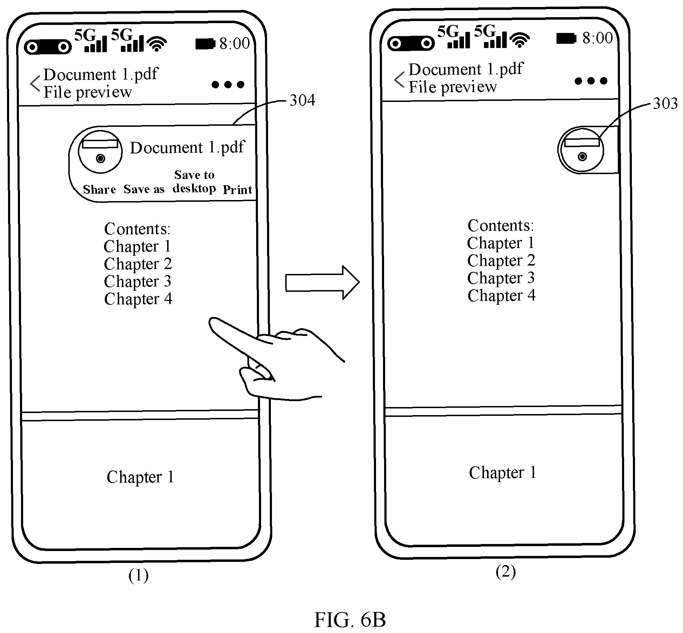

In another optional implementation, as shown in (1) in FIG. 6B, when the user taps blank space on the interface, the floating ball 304 in the unfolded state is collapsed to a folded state, as shown by a floating ball 303 displayed on an interface in (2) in FIG. 6B.

In still another optional implementation, when a floating ball corresponding to a file is in an unfolded state, if the user performs no operation on the floating ball in the unfolded state, the floating ball 304 in the unfolded state is collapsed to a folded state after a period of time. For example, if the user performs no operation on the floating ball 304 in the unfolded state within five seconds, the floating ball 304 in the unfolded state is collapsed to the folded state.

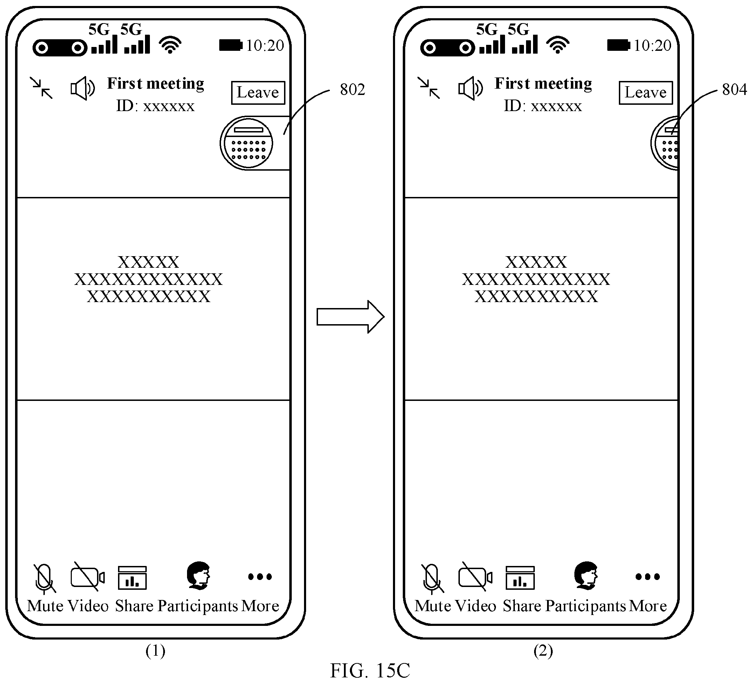

In still another optional implementation, when a floating ball corresponding to a file is in a folded state, if the user performs no operation on the floating ball in the folded state, the floating ball in the folded state is collapsed to a hidden state after a period of time. Refer to a floating ball 804 shown in (2) in FIG. 15C. For example, if the user performs no operation on the floating ball in the folded state within five seconds, the floating ball in the folded state is collapsed to the hidden state. When a floating ball corresponding to a file is in a hidden state, if the user taps the floating ball in the hidden state, the terminal device adjusts a form of the floating ball from the hidden state to a folded state in response to the operation of the user.

For example, a display color of the floating ball in the hidden state is different from a display color of the floating ball in the folded state. For example, the display color of the floating ball in the hidden state is lighter than the display color of the floating ball in the folded state. For another example, display transparency of the floating ball in the hidden state is different from display transparency of the floating ball in the folded state. For example, the display transparency of the floating ball in the hidden state is higher than the display transparency of the floating ball in the folded state.

A floating ball corresponding to a file may be randomly moved up and down on the interface of the terminal device. Optionally, when a form of the floating ball is an unfolded state or a folded state, the user may move the floating ball up and down on the interface through a touch-and-drag operation.

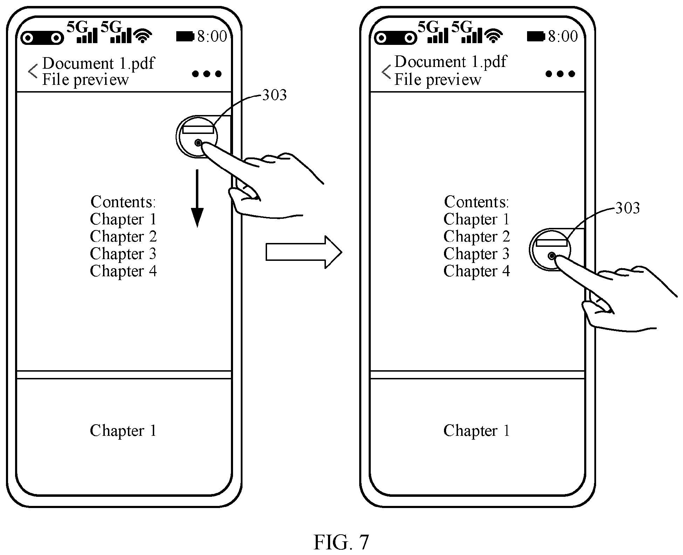

For example, as shown in FIG. 7, when the user touches and holds the floating ball 303 to move the floating ball 303 downward, a display position of the floating ball 303 on the interface of the terminal device is moved downward. In this way, when the user views file content, if the user feels that a display position of a floating ball affects viewing experience of the user, the user may adjust the display position of the floating ball through a touch-and-drag operation.

When the user closes a file, in other words, quits viewing of the file, displaying of a floating ball corresponding to the file is canceled.

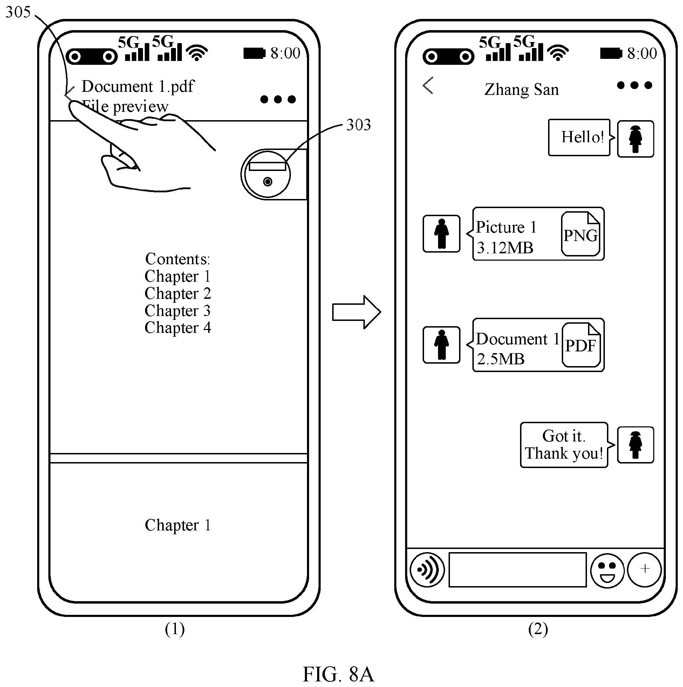

As shown in FIG. 8A, the floating ball 303 corresponding to "Document 1" is displayed on a preview page of "Document 1". When the user taps a Back option 305 to exit file viewing, the preview page of "Document 1" is closed, and the floating ball 303 corresponding to "Document 1" is no longer displayed.

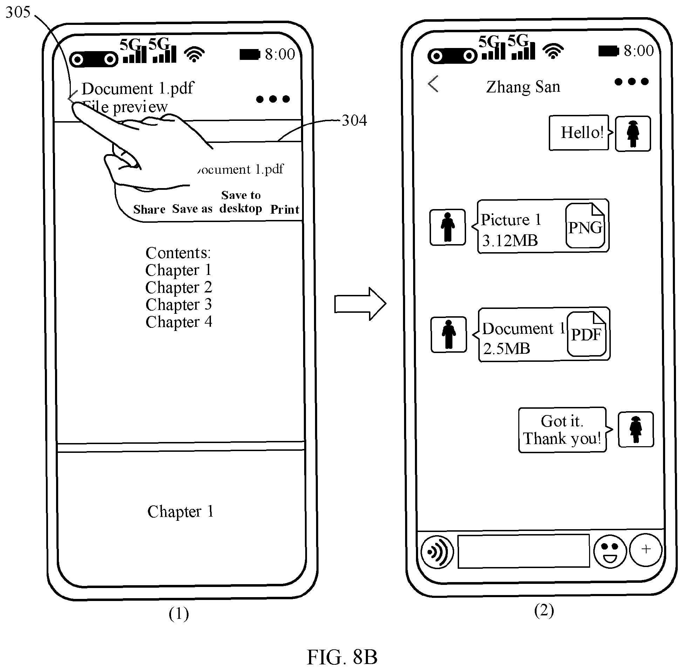

As shown in FIG. 8B, the floating ball 304 corresponding to "Document 1" is displayed on a preview page of "Document 1". When the user taps a Back option 305 to exit file viewing, the preview page of "Document 1" is closed, and the floating ball 304 corresponding to "Document 1" is no longer displayed.

After the preview page of "Document 1" is closed, the terminal device continues to display an interface of the Chat 1 APP. If the user taps the control of "Document 1" again on the interface of the Chat 1 application to open "Document 1" again for viewing, a floating ball corresponding to "Document 1" is still displayed on a preview interface of "Document 1", to perform operation guidance for the user.

In this way, regardless of whether a floating ball corresponding to a file is in an unfolded state or a folded state, displaying of the corresponding floating ball is canceled after the user closes the file. To be specific, a floating ball corresponding to a file is displayed only on a preview interface of the file, to guide execution of a related operation and facilitate subsequent management on the file.

In addition, when the user views a file in the Chat 1 application, a floating ball corresponding to the file is always displayed on a preview interface of the file. Therefore, the user does not need to complete a related consideration and perform a related operation within short time, and only needs to perform a related operation according to guidance of a function option in the floating ball when necessary. This avoids a problem that the user does not know how to perform a related operation on the file because the user cannot find guidance of a function option.

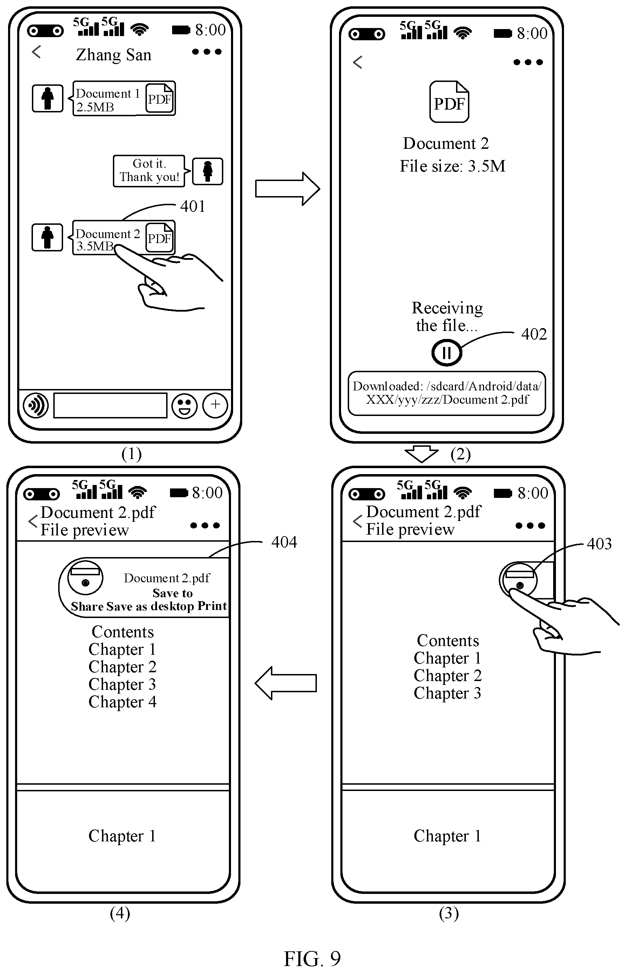

Still in the scenario shown in FIG. 5, after the preview page of "Document 1" is closed, the terminal device continues to display an interface of the Chat 1 APP. Refer to (1) in FIG. 9. On an interface shown in (1) in FIG. 9, when the other party sends a file named "Document 2", the user taps a control 401 of the file on the chat interface, and the system automatically downloads the file (or the system starts to download the file after the user taps a "Receive file" control corresponding to the file). In addition, a download progress identifier 402 shown in (2) in FIG. 9 is displayed on the interface, to display a download progress of the current document. When the file downloading is completed, the interface may further display a reminder message indicating that the downloading is completed and a download path, for example, a reminder message "Downloaded: /sdcard/Android/data/XXX/yyy/zzz/Document 2.pdf" shown in (2) in FIG. 9, and the reminder message disappears after a few seconds. When the file downloading is completed, the terminal device automatically displays a preview interface of the file, as shown in (3) in FIG. 9. After "Document 2" is opened, a floating ball 403 corresponding to "Document 2" is displayed on the preview interface of "Document 2". The floating ball corresponding to "Document 2" is used for guiding the user to perform a related operation corresponding to "Document 2". The related operation may include but is not limited to sharing, custom storage (or referred to as Save as), printing, and the like. As shown in (3) in FIG. 9, an initial form in which the floating ball 403 corresponding to "Document 2" is displayed is a folded state, and the floating ball 403 occupies a small area on the interface, without interrupting experience of viewing the file by the user. If the user taps the floating ball 403 corresponding to "Document 2", the floating ball corresponding to "Document 2" changes to an unfolded state. Refer to a floating ball 404 corresponding to "Document 2" in (4) in FIG. 9. On a display interface of the floating ball 404, an icon "File management reminder floating ball" of the floating ball, a name "Document 2.pdf" of the file associated with the floating ball, and various function options (including but not limited to a "Share" option, a "Save as" option, a "Save to desktop" option, a "Print" option, and the like) may be displayed.

In this way, floating balls displayed on preview interfaces of different files correspond to different files, and are used for guiding the user to perform related operations on corresponding files. To be specific, a floating ball corresponding to a first file is displayed on a preview interface of the first file, and is used for guiding the user to perform an operation related to the first file; and a floating ball corresponding to a second file is displayed on a preview interface of the second file, and is used for guiding the user to perform an operation related to the second file.

A floating ball corresponding to "Document 1" is used below as an example to describe function options that may be included in the floating ball.

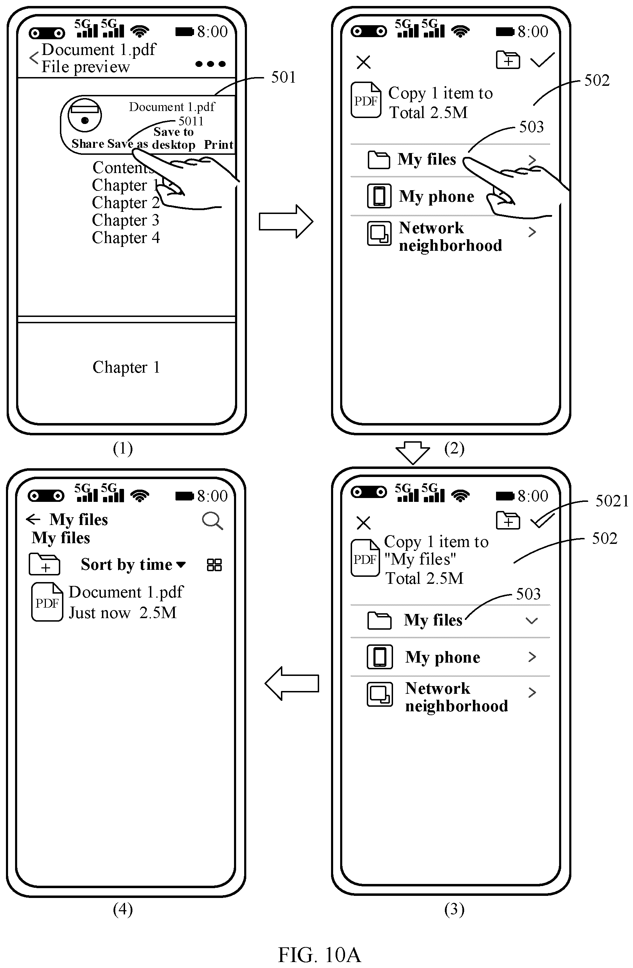

As shown in (1) in FIG. 10A, when a floating ball 501 corresponding to "Document 1" is in an unfolded state, if the user taps a "Save as" option 5011 (which may alternatively be a "Copy to" option, where a specific form of an option for saving a file is not limited in this embodiment, and the "Save as" option is used as an example for description in this embodiment of this application) on the floating ball, the interface of the terminal device switches to an interface of the File Manager application. For example, the interface may switch from (1) in FIG. 10A to (2) in FIG. 10A. The interface of the File Manager application in (2) in FIG. 10A includes a "My files" directory. In the example shown in (2) in FIG. 10A, the "My files" directory is in a folded state. Still refer to (2) in FIG. 10A. A prompt box 502 is further displayed on the interface of the File Manager application to prompt the user, and prompt information "Copy 1 item to" is displayed in the prompt box 502. When the user sets and/or adjusts a saving directory, the prompt information displayed in the prompt box 502 is adjusted correspondingly. For example, when the user taps a "My files" option 503, the prompt information displayed in the prompt box 502 is adjusted to "Copy 1 item to 'My files", and the "My files" directory is unfolded, as shown in (3) in FIG. 10A. In the example shown in (3) in FIG. 10A, it is assumed that no other files or folders exist in the "My files" directory. Still refer to (3) in FIG. 10A. If the user taps an OK option 5021 in the prompt box 502, Document 1 is stored to the root directory "My files". In this case, when the user opens the "My files" directory, the user can see that "Document 1" is stored in the root directory "My files", as shown in (4) in FIG. 10A.

The prompt box 502 may further include a Cancel option, for example, "×". The user may tap the Cancel option to cancel the operation of saving the file. Optionally, after the user cancels the operation of saving the file, the prompt box 502 is closed, and a terminal interface continues to display the interface of the File Manager application.

The file saving process shown in FIG. 10A is merely an example. In practice, the user may alternatively select a directory with more levels to save a file as needed. It can be understood that other folders and/or other files may exist in the "My files" directory. If the user wants to save Document 1 to a specified folder, for example, Folder 2 in the "My files" directory, the user may tap an icon of Folder 2 in the "My files" directory on the interface shown in (2) in FIG. 10A. In this case, the prompt information displayed in the prompt box 502 may be adjusted to "Copy 1 item to 'Folder 2'". In this case, if the user taps an OK option "√" in the prompt box 502, Document 1 may be stored in Folder 2. Further, when the user opens File 2 in the "My files" directory, the user can see that "Document 1" is stored in the directory of Folder 2.

Similarly, the user may alternatively save "Document 1" to a new file in any directory of "My files". For related content, refer to related operations for the File Manager application. Details are not described herein again in this embodiment of this application.

It should be noted that saving, by the user, "Document 1" to a directory related to "My files" based on the Save as option on the floating ball does not affect storage of "Document 1" in a related storage path of the Chat 1 application. To be specific, the user not only can open "Document 1" in the Chat 1 application for viewing, but also can open "Document 1" in the File Manager application for viewing.

In this way, the terminal device pulls up the interface of the File Manager application based on an operation performed by the user on the Save as option on the floating ball, and stores a related file in a path defined by the user, to facilitate subsequent file management by the user, thereby improving user experience.

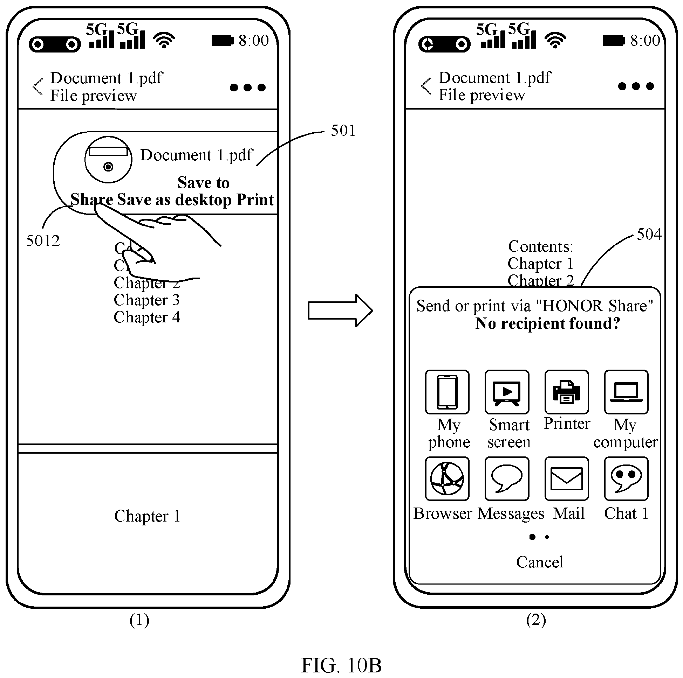

As shown in (1) in FIG. 10B, when the floating ball 501 corresponding to "Document 1" is in the unfolded state, if the user taps a "Share" option 5012 on the floating ball, a share window 504 shown in (2) in FIG. 10B is displayed on the interface. For example, the share window 504 may display icons of a plurality of share objects. The icons may include icons of other APPs installed on the terminal device, including but not limited to an icon of a mail APP, an icon of a chat APP, an icon of a browser, and an icon of a Messages APP; and may further include icons of other terminal devices, including but not limited to an icon of another mobile phone, an icon of another large-screen device (a smart screen), an icon of a printer, and an icon of a computer. The user may tap and select an object to share as needed, and then share a file. The terminal device can share a file to another APP and another device, making resource sharing manners richer and more diverse.

For example, assuming that the user needs to share a file through an email, when the user taps the icon of the mail APP in the share window 504 on the interface shown in (2) in FIG. 10B, the interface of the terminal device switches to a mail sending interface in the mail APP. In this case, "Document 1" automatically appears in an attachment column, as an attachment to the mail sent this time. Further, the user may enter information for sending the mail on the mail sending interface, for example, enter a recipient, a subject, and a mail body, select an importance level, and the like, and then tap a Send button to send the mail. In this case, "Document 1" is shared as an attachment to the recipient's mailbox. After the user taps the Send button, the interface of the terminal device may further switch from the mail sending interface to a preview interface of "Document 1", and a mail sending status is synchronously displayed. For example, when the interface of the terminal device has just switched to the preview interface of "Document 1", it is possible that the mail is being sent, and the mail sending status may be displayed as "Sending mail...", indicating that the mail has not been successfully sent. When the mail is successfully sent, prompt information of the mail sending status disappears, and preview content of "Document 1" is directly displayed on the interface. Alternatively, the prompt information of the mail sending status switches from "Sending mail..." to "Sent", and the prompt information automatically disappears after being displayed for a period of time. For example, after the string "Sent" is displayed for three seconds, the prompt of the mail sending status disappears, and the preview content of "Document 1" is displayed on the interface.

In this way, the terminal device pulls up a share window through an operation performed by the user on a share option on a floating ball, and share a file to a target object selected by the user. This implements resource sharing and enriches functions of the terminal. Compared with a process in which the user actively finds a file and then shares the file, the method in which file sharing is implemented by directly pulling up a share window through an operation on a share option on a floating ball in this embodiment makes operations more convenient and faster, improves efficiency of resource sharing, and improves user experience.

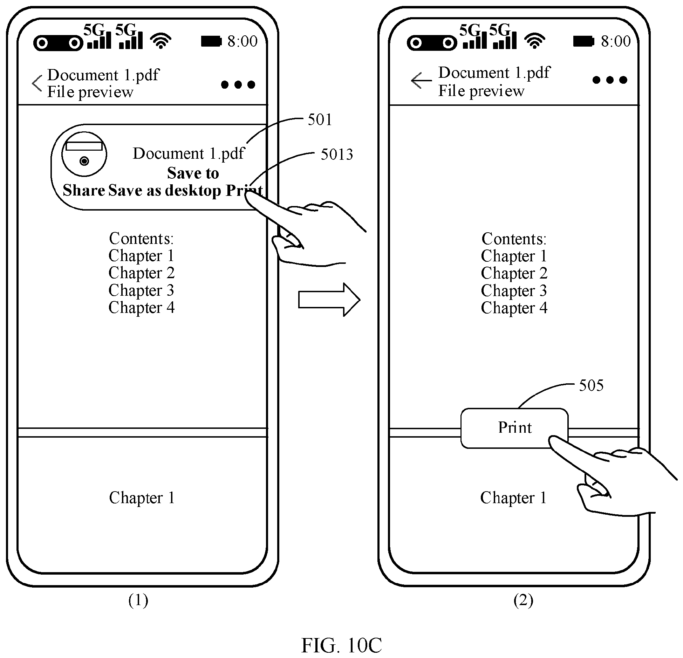

As shown in (1) in FIG. 10C, when the floating ball corresponding to "Document 1" is in the unfolded state, if the user taps a "Print" option 5013 on the floating ball, a print preview page shown in (2) in FIG. 10C is displayed on the interface. If the user confirms that the file is correct, the user may tap a "Print" control to perform a print operation on "Document 1". In this case, the user can complete the print operation on "Document 1" provided that the terminal device has established a connection to a printing device. The print preview page shown in (2) in FIG. 10C is merely an example. This is not limited in this embodiment.

In this way, the terminal device pulls up a print preview interface through an operation performed by the user on a print option on a floating ball, and completes a print operation on a related file. Compared with a method in which the user completes a file print operation based on a share window, the method in which file printing is completed by directly pulling up a print window through an operation on a print option on a floating ball in this embodiment makes operations more convenient and faster, improves efficiency of file printing, and improves user experience.

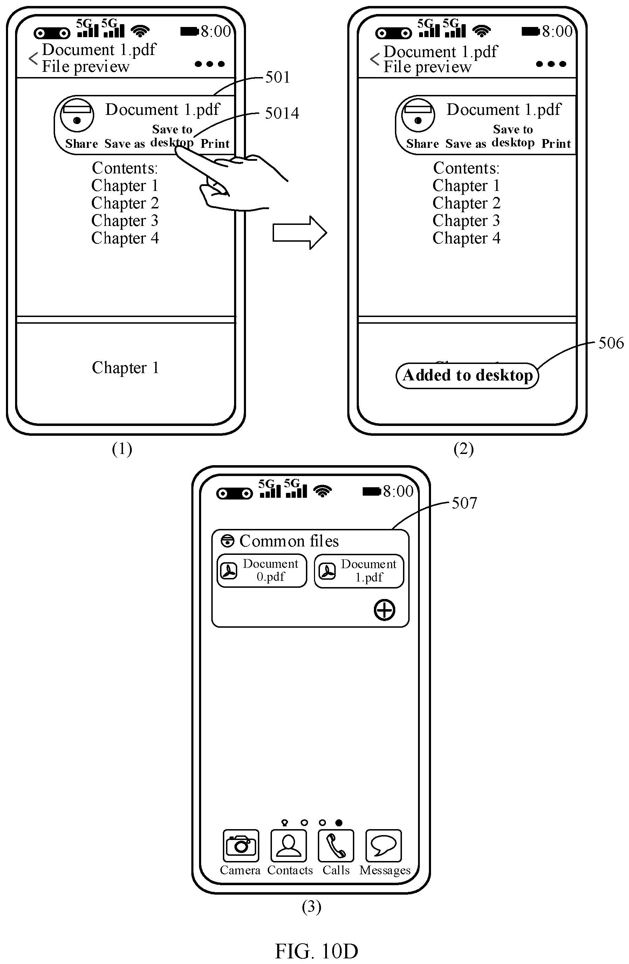

As shown in (1) in FIG. 10D, when the floating ball corresponding to "Document 1" is in the unfolded state, if the user taps a "Save to desktop" option 5014 on the floating ball, the terminal device saves "Document 1" to a desktop card. In this case, prompt information "Added to desktop" 506 may be displayed on a preview interface of "Document 1", as shown in (2) in FIG. 10D. The prompt information may automatically disappear after being displayed for a period of time. For example, the prompt information automatically disappears after being displayed for three seconds. In this way, the user can learn whether the operation of adding "Document 1" to the desktop card this time is successful.

After the terminal device saves "Document 1" to the desktop card, when the user performs a related operation to enable the terminal device to display the desktop, the user can view an image of "Document 1" in a Common files card 507 on the desktop, as shown in (3) in FIG. 10D.

Still refer to (3) in FIG. 10D. Two files, for example, Document 0.pdf and Document 1.pdf, are currently managed in the Common files card 507. The user may directly view the two files by using two file icons displayed in the Common files card 507. When the user taps a file icon corresponding to "Document 1.pdf", in response to the operation of the user, the mobile phone starts a default or preset dedicated APP for the user to view a file in a PDF format. Then the APP accesses "Document 1.pdf" and displays content of "Document 1.pdf".

A quantity of files that can be managed in the Common files card may be default in the system, or may be set based on a use habit of the user. This is not limited in this embodiment. When a quantity of files managed in the Common files card reaches a threshold, the user can no longer add a new file to the Common files card. In some implementations, a plurality of file management cards may be set on the terminal device, and the user may store a file needed by the user in any file management card according to an actual requirement.

In addition, it should be further noted that, during actual application, there may be a case in which no file management card is added to the desktop of the terminal device or the user wants to add a current file to another file management card. To better meet a use requirement of the user, after the user taps the "Save to desktop" option on the floating ball, the terminal device may display a selection window on a preview interface of a file in response to the operation behavior of the user. The selection window may include one or more controls. The controls include but are not limited to a control for choosing to add a current file to an existing file management card, a control for choosing to create a new file management card and add a current file to the newly created file management card, and the like. In this way, the user can store a file in a corresponding file management card according to an actual requirement of the user, to open the file in the corresponding file management card to view content.

It can be understood that, if the desktop of the terminal device has a plurality of, for example, at least two, file management cards, the selection window may alternatively provide two controls for choosing to add a current file to an existing file management card. To be specific, each file management card corresponds to one specific control. In this way, after the user taps a corresponding control, the terminal device can add a file to a corresponding file management card.

It should be noted that storing, by the user, a file in a file management card (for example, the Common files card) based on a Save to desktop option on a floating ball does not trigger saving of the file. When the user taps a file icon in a desktop card to view a file, the terminal device opens a file stored in a storage path of a third-party application. For example, when the user taps the "Save to desktop" option on the floating ball, in response to the operation behavior of the user, the terminal device invokes a corresponding service, instance, or performance function/interface to obtain related information of "Document 1" from a storage path of a third-party application in which "Document 1" is located, generate a corresponding file icon, add the file icon to a desktop card, and establish a shortcut between the file icon and the storage path of "Document 1".

In this way, the terminal device adds a file to a file management card on the desktop through an operation performed by the user on a Save to desktop option on a floating ball. Although the file is not saved, when the user subsequently wants to view file content, the user does not need to open a corresponding third-party application again to search for a corresponding file, and can directly tap a file icon in the file management card on the desktop to view the file content. This makes operations more convenient and faster, and improves user experience.

In an optional implementation, when a floating ball corresponding to a file is in an unfolded state, if the user taps any function option (for example, a Share option, a Save as option, a Save to desktop option, or a Print option), a form of the floating ball remains unchanged, and the floating ball is still in the unfolded state.

In another optional implementation, when a floating ball corresponding to a file is in an unfolded state, if the user taps any function option (for example, a Share option, a Save as option, a Save to desktop option, or a Print option), a form of the floating ball changes, and the floating ball is collapsed to a folded state.

In the foregoing embodiments, an example in which a file is received in a chat application is used for description. The terminal device may alternatively receive a file in an email application, or receive a file on an interface of a browser by tapping a download link by the user, or receive a file on an interface of another APP. After receiving a file, the terminal device may display a floating ball corresponding to the file on a preview interface of the file. Further, the user may perform, according to function guidance of floating balls, related operations on files received in different APPs. This makes it convenient for the user to save and manage the files received in different APPs in a centralized and orderly manner, and convenient for the user to find files from different sources, thereby improving user experience.

After the user stores a file in a directory related to "My files" based on a save-as function provided by a floating ball, the user may open the File Manager APP, tap the target folder "My files" on the interface of the File Manager APP, and find, in the directory related to "My files", a file that needs to be searched for. In the method, by storing a file in a directory of a target folder in which a user has custom permissions, the user may find a required file in the target folder based on a custom path. In this way, file searching can be implemented without requiring the user to understand an obscure and complex default path for file storage. This makes file searching more convenient and faster, and improves user experience.

It should be noted that, in the foregoing embodiments, an example in which a file type is a PDF file is used for description. The file type mentioned above may be a document, a picture, audio, a compressed package, or the like. This is not limited in this embodiment. For example, a file format of the picture type includes but is not limited to JPG, PNG, BMP, GIF, RAW, and the like; a file format of the video type includes but is not limited to MP4, AVI, MOV, RMVB, MKV, and the like; a file format of the document type includes but is not limited to DOC, PPT/PPTX, XLS, TXT, PDF, EPUB, and the like; a file format of the audio type includes but is not limited to MP3, WUV, M4A, FLAC, AAC, and the like; and a file format of the compressed package includes but is not limited to ZIP, RAR, 7Z, and the like.

### (2) Schedule reminder management scenario

Currently, an increasing quantity of users are accustomed to setting schedule reminders on terminal devices. Setting a schedule reminder by a user is equivalent to setting an "alarm clock" for an important schedule, to remind the user not to miss the schedule during busy work and life. The user may perform an operation of creating a schedule, modifying a schedule, or deleting a schedule on a related interface of a Calendar application. For example, schedule information includes at least a schedule name, a schedule date, and schedule start/end time.

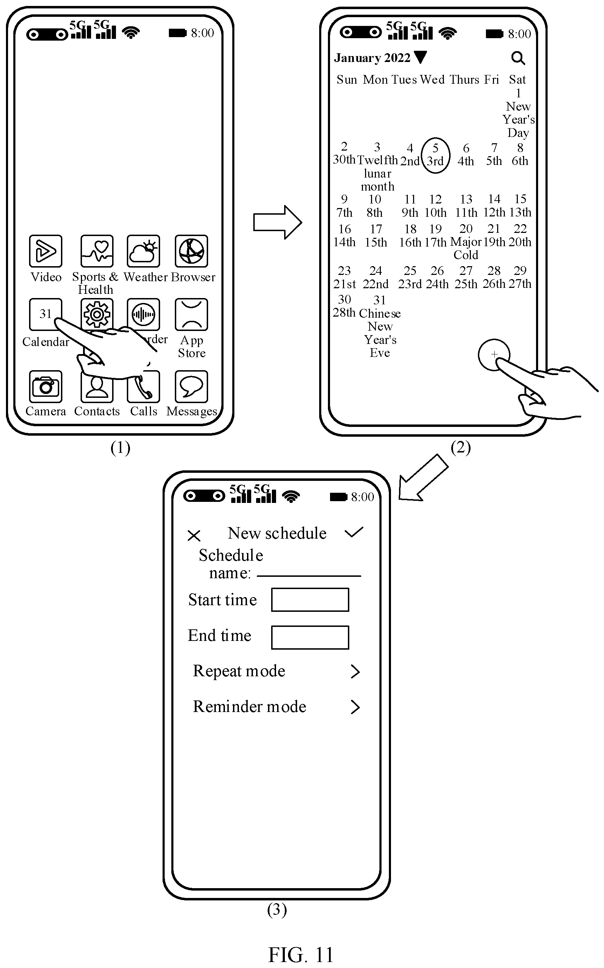

For example, as shown in (1) in FIG. 11, a user taps an icon of a Calendar application. In response to the operation of the user, a terminal device displays an interface of the Calendar application. Refer to (2) in FIG. 11. In addition to calendar information, schedule information may be further displayed on the interface of the Calendar application. If the user needs to create a schedule, the user may tap a New schedule control on the interface of the Calendar application after selecting a schedule date, as shown in (2) in FIG. 11. In response to the user tapping the New schedule control, the terminal device may display a new schedule editing interface shown in (3) in FIG. 11. Still refer to (3) in FIG. 11. When creating a schedule, the user needs to add a schedule name, set start time and end time of the schedule, select a repeat mode and a reminder mode for a schedule reminder, and the like. The new schedule editing interface shown in (3) in FIG. 11 is merely an example for demonstration. This is not limited in this embodiment of this application. After completing settings of information related to the new schedule, the user taps an OK option, so that the terminal device can complete the operation of creating the schedule reminder. Further, when time reaches a period of time before the start time of the schedule, or when time reaches the start time of the schedule, the terminal device performs a corresponding schedule reminder for the user.

A schedule reminder manner is related to settings by the user and a display status of the terminal device.

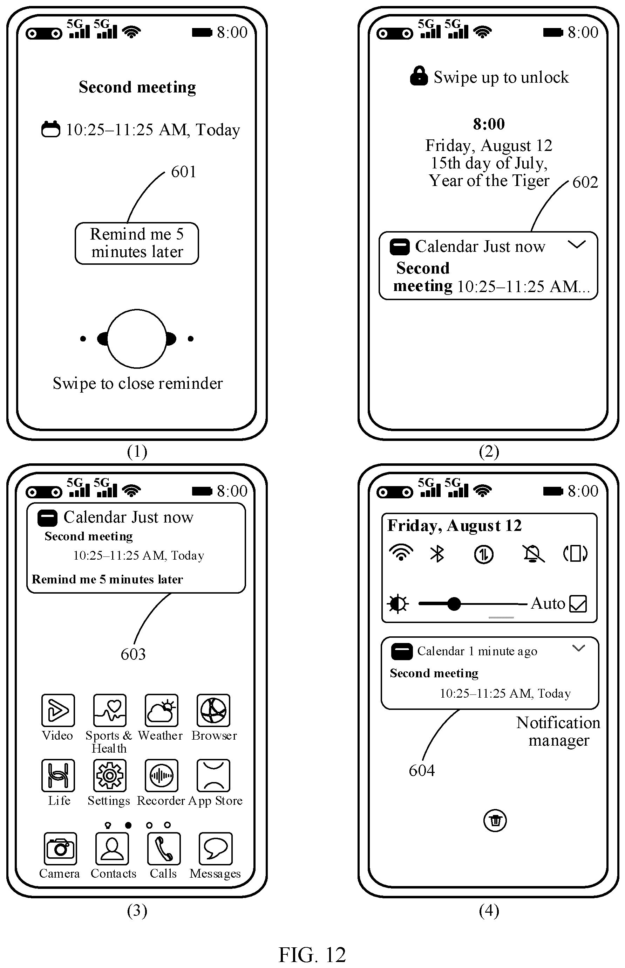

In a possible case, the terminal device may perform a schedule reminder in a form of an alarm clock. As shown in (1) in FIG. 12, a schedule name, schedule start/end time, a reminder continuation mode, and a reminder closing mode are displayed on a schedule reminder interface. The reminder continuation mode may be "Remind me 5 minutes later" 601. The reminder closing mode may be sliding a reminder closing control to the left or the right. For example, as shown in (1) in FIG. 12, in the schedule reminder, the schedule name is "Second meeting", and the schedule start/end time is 10:25-11:25 AM.

In this case, if the user taps "Remind me 5 minutes later", the terminal device performs a schedule reminder for the user again five minutes later. If the user slides the reminder closing control, the terminal device no longer performs a schedule reminder for the user. Therefore, this schedule reminder mode may be a one-time reminder, and the user may still forget about the schedule after closing the schedule reminder. In this schedule reminder mode, the user may be reminded again five minutes later, but a reminder occasion may still be inaccurate. Consequently, the user may tap the "Remind me 5 minutes later" control again to adjust schedule reminder time.

In a possible case, the terminal device may display notification information corresponding to a schedule reminder on a lock screen interface, to perform a schedule reminder for the user. As shown in (2) in FIG. 12, notification information 602 is displayed on the lock screen interface of the terminal device. Notification information receiving time, a schedule name, and schedule start/end time are displayed in the notification information 602. If the user deletes the notification message 602, the user cannot view the notification message used for a schedule reminder again. Therefore, this schedule reminder mode may also only be a one-time reminder, and the user may still forget about the schedule after deleting the notification message.

In a possible case, the terminal device displays any interface (a non-lock-screen interface or a non-screen-off interface), and a schedule reminder may be displayed in a form of a banner notification. As shown in (3) in FIG. 12, a banner notification 603 is displayed on a main interface of the terminal device. The banner notification 603 disappears after being displayed for a period of time, for example, disappears after being displayed for five seconds. The user may alternatively perform a swipe-up operation to make the banner notification 603 disappear. Before the banner notification 603 disappears, the user may tap "Remind me 5 minutes later", so that the terminal device performs a schedule reminder for the user again five minutes later.

In this case, if the user taps "Remind me 5 minutes later", the terminal device performs a schedule reminder for the user again five minutes later. If the user performs no operation or swipes up to close the banner notification, the terminal device no longer performs a schedule reminder for the user. Therefore, this schedule reminder mode may be a one-time reminder, and the user may still forget about the schedule after closing the schedule reminder. In this schedule reminder mode, the user may be reminded again five minutes later, but a reminder occasion may still be inaccurate. Consequently, the user may tap the "Remind me 5 minutes later" control again to adjust schedule reminder time.

In a possible case, notification information (including a banner notification or a notification on a lock screen interface) used for a schedule reminder may be added to a notification center. In this case, the user may alternatively find a corresponding schedule reminder on an interface of the notification center. However, when a schedule reminder is added to the notification center, the user is unaware of this, and the user needs to actively view the schedule reminder. This cannot achieve good reminder effect.

To resolve the foregoing problem and improve user experience, embodiments of this application provide a task processing-based reminder method. In the method, for the schedule reminder management scenario, the terminal device can provide a schedule reminder for the user by using a floating ball, to guide the user to perform an operation corresponding to the schedule. This makes it more convenient for the user to process a related schedule.

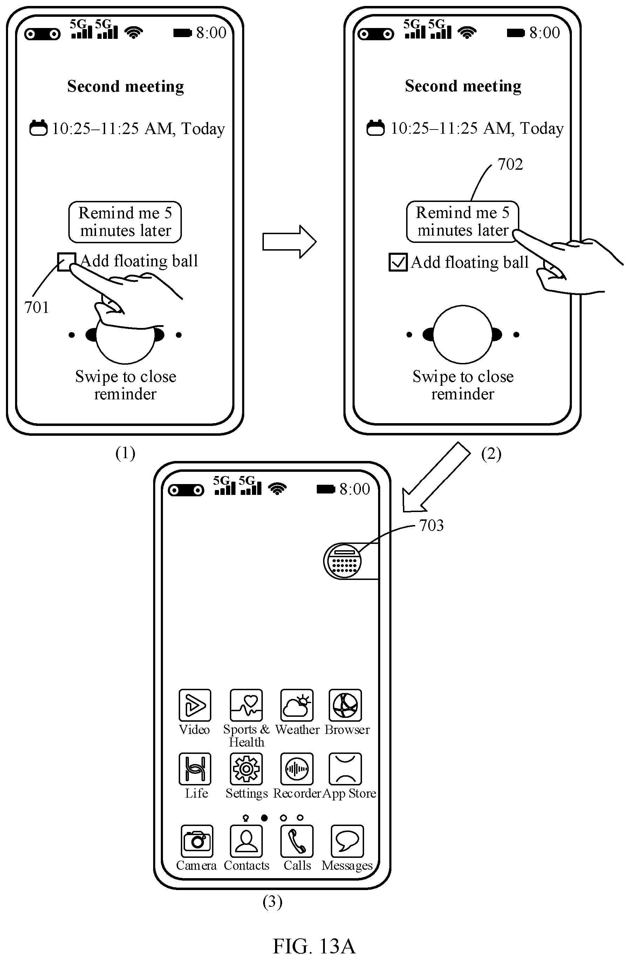

FIG. 13A shows an example application scenario. As shown in (1) in FIG. 13A, the terminal device may perform a schedule reminder in a form of an alarm clock. A schedule name, schedule start/end time, a reminder continuation mode, and a reminder closing mode are displayed on a schedule reminder interface. Function options corresponding to the reminder continuation mode include a "Remind me 5 minutes later" function option and a function option about whether to add a floating ball. The reminder closing mode may be sliding a reminder closing control to the left or the right. For example, as shown in (1) in FIG. 13A, in the schedule reminder, the schedule name is "Second meeting", and the schedule start/end time is 10:25-11:25 AM.

If the user needs the terminal device to perform a schedule reminder again five minutes later and expects a floating ball corresponding to the schedule reminder to be displayed on an interface (a non-lock-screen interface or a non-screen-off interface) of the terminal device, the user may tap an Add floating ball option 701, so that the Add floating ball option is in a selected state, as shown in (2) in FIG. 13A. In this case, if the user taps a "Remind me 5 minutes later" option 702, the schedule reminder interface displayed in the form of the alarm clock on the terminal device is closed, and is displayed to the user again five minutes later. In addition, when the user performs an operation on the terminal device to enable the terminal device to display any interface (a non-lock-screen interface and a non-screen-off interface), a floating ball corresponding to the schedule reminder is displayed on the interface of the terminal device. The floating ball is used for performing a schedule reminder for the user. For example, when the user performs an operation on the terminal device to enable the terminal device to display the main interface, a floating ball 703 corresponding to the schedule reminder is displayed on the main interface. Refer to (2) in FIG. 13A. For details about related descriptions of the floating ball corresponding to the schedule reminder, refer to the following descriptions.

If the user does not tap the Add floating ball option 701 and the Add floating ball option is in an unselected state, when the user taps the "Remind me 5 minutes later" option 702, the schedule reminder interface displayed in the form of the alarm clock on the terminal device is closed, and is displayed to the user again five minutes later. In addition, when the user performs an operation on the terminal device to enable the terminal device to display any interface, no floating ball corresponding to the schedule reminder is displayed on the interface of the terminal device.

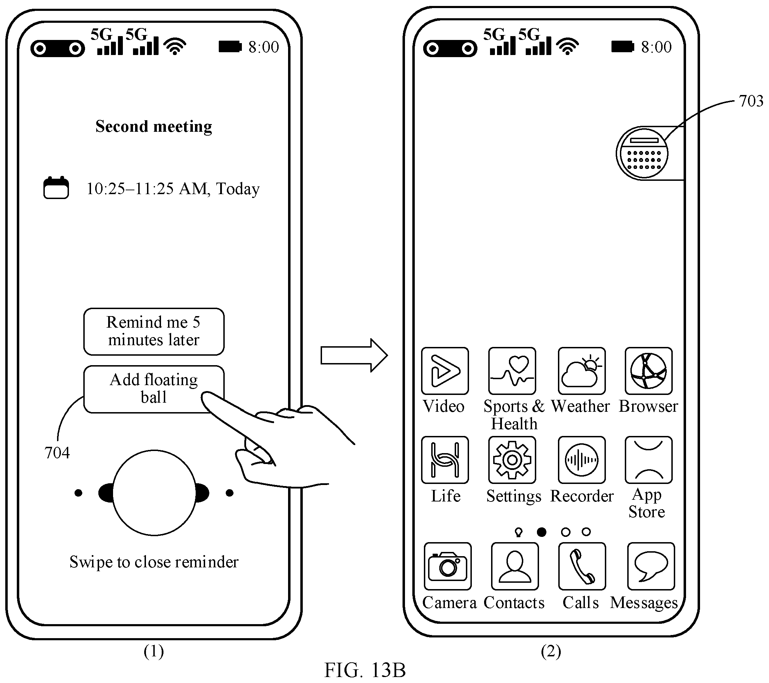

FIG. 13B shows an example application scenario. In the application scenario, an example in which a schedule reminder is performed in a form of an alarm clock is still used for description. As shown in (1) in FIG. 13B, the terminal device may perform a schedule reminder in a form of an alarm clock. A schedule name, schedule start/end time, a reminder continuation mode, and a reminder closing mode are displayed on a schedule reminder interface. Function options corresponding to the reminder continuation mode include a "Remind me 5 minutes later" function option and a function option for adding a floating ball. The reminder closing mode may be sliding a reminder closing control to the left or the right. For example, as shown in (1) in FIG. 13B, in the schedule reminder, the schedule name is "Second meeting", and the schedule start/end time is 10:25-11:25 AM.

If the user needs the terminal device to perform a schedule reminder again five minutes later, the user may tap a "Remind me 5 minutes later" option. If the user needs to display a floating ball corresponding to the schedule reminder on an interface of the terminal device for a real-time reminder, the user may tap an "Add floating ball" option 704. When the user taps the "Add floating ball" option 704, in response to the operation of the user, the schedule reminder interface displayed in a form of an alarm clock on the terminal device is closed, and is not displayed to the user again five minutes later. In addition, when the user performs an operation on the terminal device to enable the terminal device to display any interface (a non-lock-screen interface and a non-screen-off interface), a floating ball corresponding to the schedule reminder is displayed on the interface of the terminal device. The floating ball is used for performing a schedule reminder for the user. For example, when the user performs an operation on the terminal device to enable the terminal device to display the main interface, a floating ball 703 corresponding to the schedule reminder is displayed on the main interface. Refer to (2) in FIG. 13B. For details about related descriptions of the floating ball corresponding to the schedule reminder, refer to the following descriptions.

If the user taps a "Remind me 5 minutes later" option, the schedule reminder interface displayed in the form of the alarm clock on the terminal device is closed, and is displayed to the user again five minutes later. In addition, when the user performs an operation on the terminal device to enable the terminal device to display any interface, no floating ball corresponding to the schedule reminder is displayed on the interface of the terminal device.

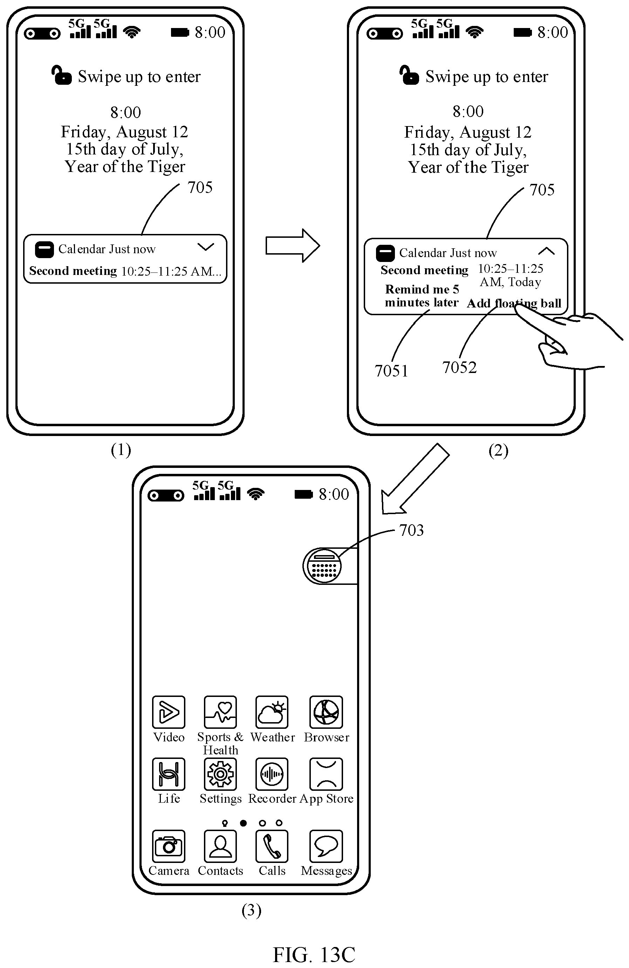

FIG. 13C shows an example application scenario. In the application scenario, an example in which a schedule reminder is performed in a form of a lock-screen notification is used for description. As shown in (1) in FIG. 13C, when the terminal device displays a lock screen interface, the terminal device may perform a schedule reminder for the user in a form of a lock-screen notification. It should be noted that, when the terminal device is in a lock-screen state, the user may delete the lock-screen notification through a specified operation (for example, swiping left and tapping a Delete option), but cannot perform an operation on another option in the notification. After the terminal device is unlocked, the user may perform an operation on another option in the notification.

On the interface shown in (1) in FIG. 13C, a notification 705 corresponding to a schedule reminder is in a folded state. After the user performs an operation on a folding option, the notification 705 is unfolded. Refer to an interface shown in (2) in FIG. 13C. As shown in (2) in FIG. 13C, a schedule name and schedule start/end time are displayed in the notification 705. For example, as shown in (2) in FIG. 13C, in the schedule reminder, the schedule name is "Second meeting", and the schedule start/end time is 10:25-11:25 AM. In addition, a "Remind me 5 minutes later" option 7051 and an "Add floating ball" option 7052 are further displayed in the notification 705. When the terminal device is in an unlocked state, as shown in (2) in FIG. 13C, the user may perform an operation on the "Remind me 5 minutes later" option 7051 or the "Add floating ball" option 7052.

The user taps the "Remind me 5 minutes later" option 7051. In response to the operation of the user, the terminal device deletes the notification 705 (in other words, no longer displays the notification 705), and displays the notification to the user again five minutes later, to perform a schedule reminder for the user.

In an optional implementation, if the user taps the "Add floating ball" option 7052, in response to the operation of the user, the terminal device deletes the notification 705 (in other words, no longer displays the notification 705), and displays the notification to the user again five minutes later. In addition, when the user performs an operation on the terminal device to enable the terminal device to display any interface (a non-lock-screen interface and a non-screen-off interface), a floating ball corresponding to the schedule reminder is displayed on the interface of the terminal device. For example, when the user performs an operation on the terminal device to enable the terminal device to display the main interface, a floating ball 703 corresponding to the schedule reminder is displayed on the main interface. Refer to (3) in FIG. 13C. For details about related descriptions of the floating ball corresponding to the schedule reminder, refer to the following descriptions.

In this way, through one operation, the user can not only enable the terminal device to perform a schedule reminder for the user five minutes later, but also enable the terminal device to display a floating ball corresponding to the schedule reminder to notify the user of the schedule in real time.

In another optional implementation, if the user taps the "Add floating ball" option 7052, the terminal device deletes the notification 705 (in other words, no longer displays the notification 705) in response to the operation of the user. In addition, when the user performs an operation on the terminal device to enable the terminal device to display any interface (a non-lock-screen interface and a non-screen-off interface), a floating ball corresponding to the schedule reminder is displayed on the interface of the terminal device. For example, when the user performs an operation on the terminal device to enable the terminal device to display the main interface, a floating ball 703 corresponding to the schedule reminder is displayed on the main interface. Refer to (3) in FIG. 13C.

In this way, in a scenario in which the user uses the terminal device, to be specific, in a scenario in which the user keeps viewing an interface of the terminal device, if the user does not want the terminal device to perform a reminder at an inaccurate occasion at an interval of time, the user may tap the "Add floating ball" option to enable the terminal device to perform a schedule reminder on the interface only through a floating ball. The terminal device performs a schedule reminder for the user based on the floating ball. In this way, a real-time schedule reminder can be performed for the user, without affecting other experience of using the terminal device by the user.

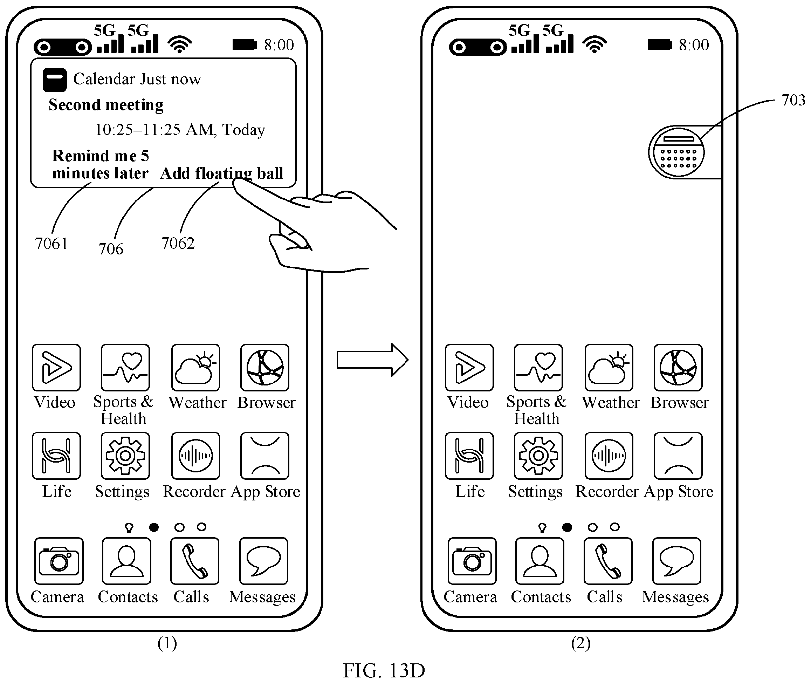

FIG. 13D shows an example application scenario. In the application scenario, an example in which a schedule reminder is performed in a form of a banner notification is used for description. When the terminal device displays any interface (a non-lock-screen interface or a non-screen-off interface), for example, the terminal device displays a main interface, as shown in (1) in FIG. 13D, the terminal device may perform a schedule reminder for the user through a banner notification 706. The banner notification 706 may automatically disappear after being displayed for a period of time, for example, automatically disappear after being displayed for five seconds.

As shown in (1) in FIG. 13D, a schedule name and schedule start/end time are displayed in the banner notification 706. For example, as shown in (1) in FIG. 13D, in the schedule reminder, the schedule name is "Second meeting", and the schedule start/end time is 10:25-11:25 AM. In addition, a "Remind me 5 minutes later" option 7061 and an "Add floating ball" option 7062 are further displayed in the banner notification 706 corresponding to the schedule reminder. The user may perform an operation on the "Remind me 5 minutes later" option 7061 or the "Add floating ball" option 7062 in the banner notification 706.

The user taps the "Remind me 5 minutes later" option 7061. In response to the operation of the user, displaying of the banner notification 706 is canceled, and the banner notification is displayed to the user again five minutes later, to perform a schedule reminder for the user again.

In an optional implementation, if the user taps the "Add floating ball" option 7062, in response to the operation of the user, the terminal device cancels displaying of the banner notification 706, and displays the banner notification to the user again five minutes later, to perform a schedule reminder for the user again. In addition, when the user performs an operation on the terminal device to enable the terminal device to display any interface (a non-lock-screen interface and a non-screen-off interface), a floating ball corresponding to the schedule reminder is displayed on the interface of the terminal device. For example, when the user performs an operation on the terminal device to enable the terminal device to display the main interface, a floating ball 703 corresponding to the schedule reminder is displayed on the main interface. Refer to (2) in FIG. 13D. For details about related descriptions of the floating ball corresponding to the schedule reminder, refer to the following descriptions.

In this way, through one operation, the user can not only enable the terminal device to perform a schedule reminder for the user five minutes later, but also enable the terminal device to display a floating ball corresponding to the schedule reminder to notify the user of the schedule in real time.

In another optional implementation, if the user taps the "Add floating ball" option 7062, the terminal device cancels displaying of the banner notification 706 in response to the operation of the user. In addition, when the user performs an operation on the terminal device to enable the terminal device to display any interface (a non-lock-screen interface and a non-screen-off interface), a floating ball corresponding to the schedule reminder is displayed on the interface of the terminal device. For example, when the user performs an operation on the terminal device to enable the terminal device to display the main interface, a floating ball 703 corresponding to the schedule reminder is displayed on the main interface. Refer to (2) in FIG. 13D.

In this way, in a scenario in which the user uses the terminal device, to be specific, in a scenario in which the user keeps viewing an interface of the terminal device, if the user does not want the terminal device to perform a reminder at an inaccurate occasion at an interval of time, the user may tap the "Add floating ball" option to enable the terminal device to perform a schedule reminder on the interface only through a floating ball. The terminal device performs a schedule reminder for the user based on the floating ball. In this way, a real-time schedule reminder can be performed for the user, without affecting other experience of using the terminal device by the user.

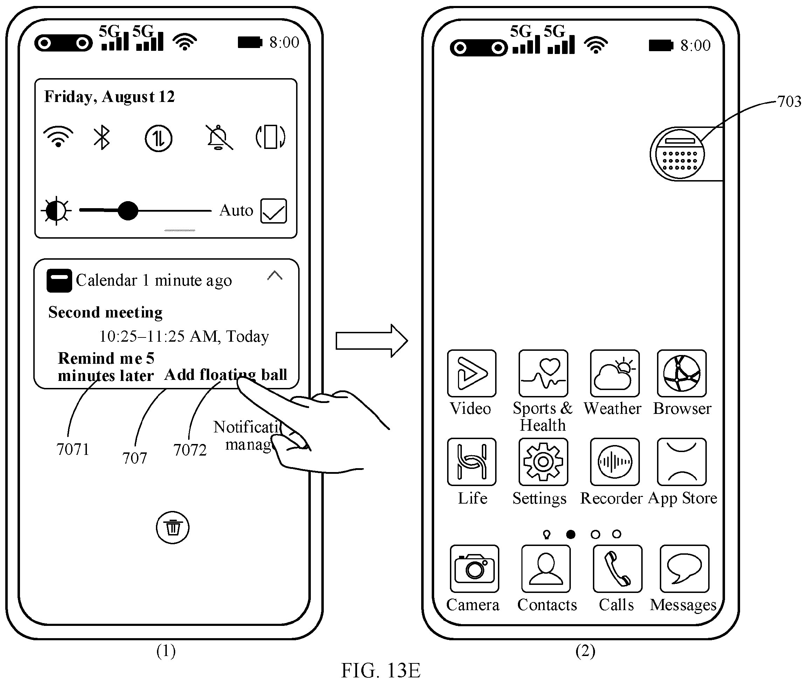

FIG. 13E shows an example application scenario. In the application scenario, a notification corresponding to a schedule reminder is added to the notification center, and the user may also view the schedule reminder in the notification center. As shown in (1) in FIG. 13E, notification information 707 is displayed in the notification center of the terminal device. A schedule name and schedule start/end time are displayed in the notification information 707. For example, as shown in (1) in FIG. 13E, in the schedule reminder, the schedule name is "Second meeting", and the schedule start/end time is 10:25-11:25 AM. In addition, a "Remind me 5 minutes later" option 7071 and an "Add floating ball" option 7072 are further displayed in the banner notification 707 corresponding to the schedule reminder. The user may perform an operation on the "Remind me 5 minutes later" option 7071 or the "Add floating ball" option 7072 in the notification information 707.

The user taps the "Remind me 5 minutes later" option 7071. In response to the operation of the user, displaying of the notification information 707 in the notification center is canceled, and the notification information is displayed to the user again five minutes later, to perform a schedule reminder for the user again.

In an optional implementation, if the user taps the "Add floating ball" option 7072, in response to the operation of the user, the terminal device cancels displaying of the notification information 707 in the notification center, and displays the banner notification to the user again five minutes later, to perform a schedule reminder for the user again. In addition, when the user performs an operation on the terminal device to enable the terminal device to display any interface (a non-lock-screen interface and a non-screen-off interface), a floating ball corresponding to the schedule reminder is displayed on the interface of the terminal device. For example, when the user performs an operation on the terminal device to enable the terminal device to display the main interface, a floating ball 703 corresponding to the schedule reminder is displayed on the main interface. Refer to (2) in FIG. 13E. For details about related descriptions of the floating ball corresponding to the schedule reminder, refer to the following descriptions.

In this way, through one operation, the user can not only enable the terminal device to perform a schedule reminder for the user five minutes later, but also enable the terminal device to display a floating ball corresponding to the schedule reminder to notify the user of the schedule in real time.

In another optional implementation, if the user taps the "Add floating ball" option 7072, the terminal device cancels displaying of the notification information 707 in the notification center in response to the operation of the user. In addition, when the user performs an operation on the terminal device to enable the terminal device to display any interface (a non-lock-screen interface and a non-screen-off interface), a floating ball corresponding to the schedule reminder is displayed on the interface of the terminal device. For example, when the user performs an operation on the terminal device to enable the terminal device to display the main interface, a floating ball 703 corresponding to the schedule reminder is displayed on the main interface. Refer to (2) in FIG. 13E.

In this way, in a scenario in which the user uses the terminal device, to be specific, in a scenario in which the user keeps viewing an interface of the terminal device, if the user does not want the terminal device to perform a reminder at an inaccurate occasion at an interval of time, the user may tap the "Add floating ball" option to enable the terminal device to perform a schedule reminder on the interface only through a floating ball. The terminal device performs a schedule reminder for the user based on the floating ball. In this way, a real-time schedule reminder can be performed for the user, without affecting other experience of using the terminal device by the user.

The foregoing describes a process of adding a floating ball corresponding to a schedule reminder with reference to several possible application scenarios. It should be noted that, when a user performs an operation on a terminal device to cause a change in an interface of the terminal device, a floating ball corresponding to a schedule reminder does not automatically disappear, unless the schedule ends (or referred to as that the schedule expires).

A floating ball corresponding to a schedule reminder is described below in detail by using a specific application scenario as an example. The same is true for a floating ball corresponding to a schedule reminder in other scenarios, and details are not described again.

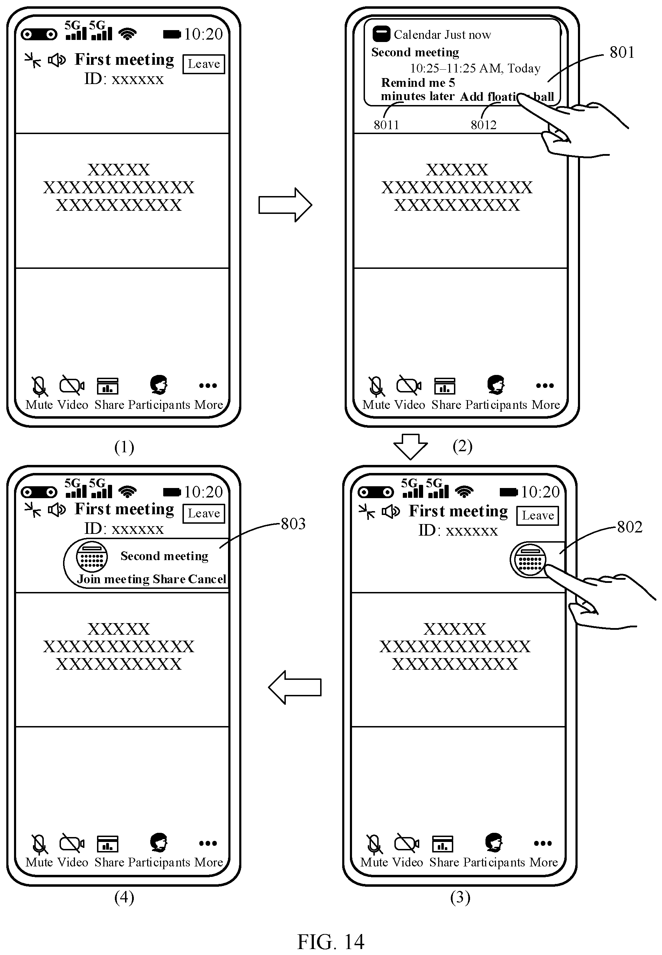

FIG. 14 shows an example application scenario. A user participates in a network meeting by using a terminal device, and the terminal device displays a network meeting interface. Refer to (1) in FIG. 14. In a process in which the user participates in the network meeting, it is assumed that the terminal device displays a banner notification 801 to perform a schedule reminder for the user. The schedule reminder corresponding to the banner notification 801 is preset by the user, and is used for notifying the user that the user needs to participate in a second meeting at 10:25-11:25 AM today. In the schedule reminder, a schedule name is "Second meeting", and schedule start/end time is 10:25-11:25 AM. The banner notification 801 may automatically disappear after being displayed for a period of time, for example, automatically disappear after being displayed for five seconds.

As shown in (2) in FIG. 14, the schedule name and the schedule start/end time are displayed in the banner notification 801, and a "Remind me 5 minutes later" option 8011 and an "Add floating ball" option 8012 are further displayed in the banner notification 801. The user may perform an operation on the "Remind me 5 minutes later" option 8011 or the "Add floating ball" option 8012 in the banner notification 801.

Still refer to (2) in FIG. 14. If the user taps the "Add floating ball" option 8012, the terminal device cancels displaying of the banner notification 801 in response to the operation of the user. In addition, a floating ball 802 corresponding to the schedule reminder is displayed on an interface of the terminal device. Refer to (3) in FIG. 14. In this embodiment, the floating ball 802 is used for guiding the user to perform an operation related to the "Second meeting" schedule reminder.

Tapping the "Add floating ball" option 8012 by the user may trigger the terminal device to perform a schedule reminder for the user again five minutes later, or may not trigger the terminal device to perform a schedule reminder for the user again five minutes later. This is not limited in this embodiment.

Still refer to (3) in FIG. 14. An initial form in which the floating ball 802 corresponding to the "Second meeting" schedule reminder is displayed is a folded state, and the floating ball 802 occupies a small area on the interface, without interrupting experience of using the terminal device by the user. When the floating ball corresponding to the schedule reminder is in the folded state, a display interface of the floating ball may include but is not limited to an icon (for example, "Schedule reminder floating ball") of the floating ball. If the user taps the floating ball 802 corresponding to the "Second meeting" schedule reminder, the floating ball 802 corresponding to the "Second meeting" schedule reminder changes to an unfolded state. Refer to a floating ball 803 corresponding to the "Second meeting" schedule reminder in (4) in FIG. 14. When the floating ball corresponding to the schedule reminder is in the unfolded state, a display interface of the floating ball may include but is not limited to an icon (for example, "Schedule reminder floating ball") of the floating ball, a name (for example, Second meeting) of the schedule associated with the floating ball, and various function options. For example, as shown in (4) in FIG. 14, function options displayed on the floating ball may include but are not limited to a "Join meeting" option, a "Share" option, a "Cancel" option, and the like, to guide the user to perform an operation corresponding to the "Second meeting" schedule reminder. The "Join meeting" option is used for guiding the user to join "Second meeting". The "Share" option is used for the user to share the "Second meeting" schedule. The "Cancel" option is used for the user to cancel displaying of the floating ball corresponding to the "Second meeting" schedule reminder.

As shown in (3) and (4) in FIG. 14, the floating ball 802 and the floating ball 803 corresponding to the "Second meeting" schedule reminder may be displayed on a right boundary of the interface, or the floating ball 802 and the floating ball 803 corresponding to the "Second meeting" schedule reminder may be displayed on a left boundary of the interface. This is not limited in this embodiment of this application. Similarly, the floating ball 802 and the floating ball 803 corresponding to the "Second meeting" schedule reminder may be displayed in an upper half area of the right boundary of the interface, or the floating ball 802 and the floating ball 803 corresponding to the "Second meeting" schedule reminder may be displayed in a lower half area of the right boundary of the interface. This is not limited in this embodiment of this application either.

A display status of a floating ball corresponding to a schedule reminder may randomly switch between a folded state and an unfolded state.

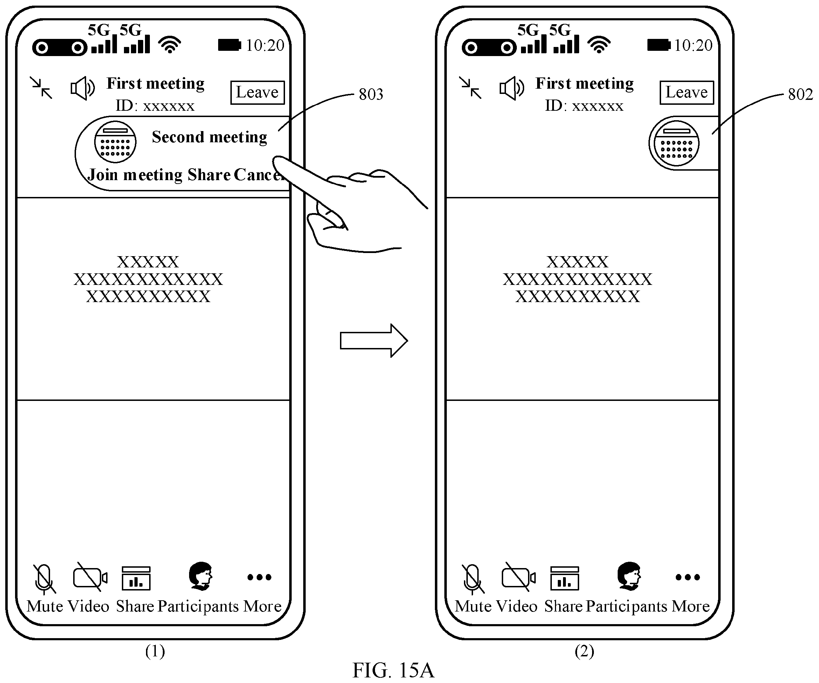

In an optional implementation, as shown in (1) in FIG. 15A, when the user taps the floating ball 803 in the unfolded state, for example, the user taps an icon of the floating ball 803 or the user taps blank space on the floating ball 803, the floating ball 803 in the unfolded state is collapsed to a folded state, as shown by a floating ball 802 displayed on an interface in (2) in FIG. 15A.

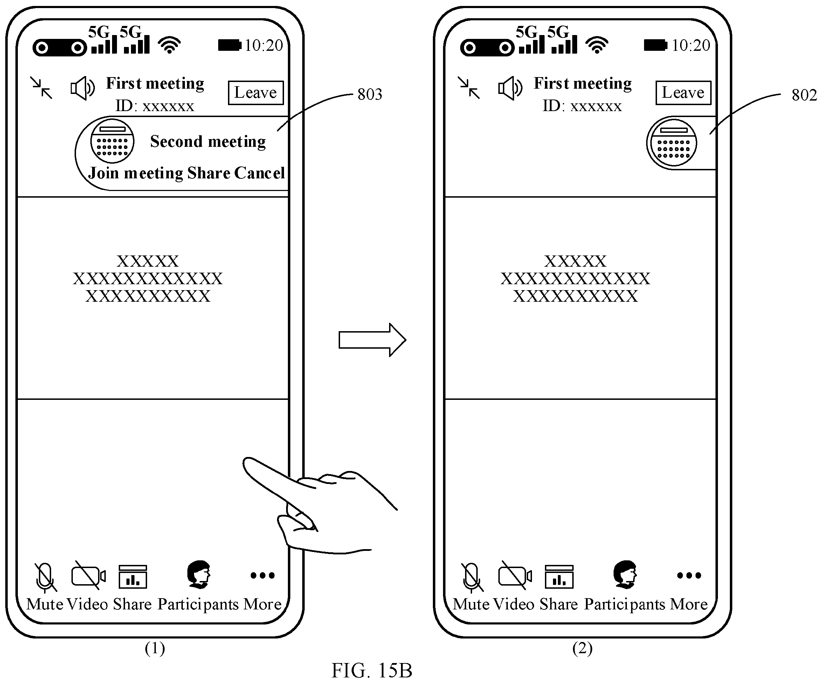

In another optional implementation, as shown in (1) in FIG. 15B, when the user taps blank space on the interface, the floating ball 803 in the unfolded state is collapsed to a folded state, as shown by a floating ball 802 displayed on an interface in (2) in FIG. 15B.

In still another optional implementation, when a floating ball 803 corresponding to a schedule reminder is in an unfolded state, if the user performs no operation on the floating ball 803 in the unfolded state, the floating ball 803 in the unfolded state is collapsed to a folded state after a period of time. For example, if the user performs no operation on the floating ball 803 in the unfolded state within five seconds, the floating ball 803 in the unfolded state is collapsed to the folded state.

In still another optional implementation, as shown in (1) in FIG. 15C, when a floating ball 802 corresponding to a schedule reminder is in a folded state, if the user performs no operation on the floating ball 802 in the folded state, the floating ball 802 in the folded state is collapsed to a hidden state after a period of time. Refer to a floating ball 804 shown in (2) in FIG. 15C. For example, if the user performs no operation on the floating ball 802 in the folded state within five seconds, the floating ball 802 in the folded state is collapsed to the hidden state. When a floating ball corresponding to a schedule reminder is in a hidden state, if the user taps the floating ball in the hidden state, the terminal device adjusts a form of the floating ball from the hidden state to a folded state in response to the operation of the user.

For example, a display color of the floating ball in the hidden state is different from a display color of the floating ball in the folded state. For example, the display color of the floating ball in the hidden state is lighter than the display color of the floating ball in the folded state. For another example, display transparency of the floating ball in the hidden state is different from display transparency of the floating ball in the folded state. For example, the display transparency of the floating ball in the hidden state is higher than the display transparency of the floating ball in the folded state.

A floating ball corresponding to a schedule reminder may be randomly moved up and down on the interface of the terminal device. Optionally, when a form of the floating ball is an unfolded state or a folded state, the user may move the floating ball up and down on the interface through a touch-and-drag operation.

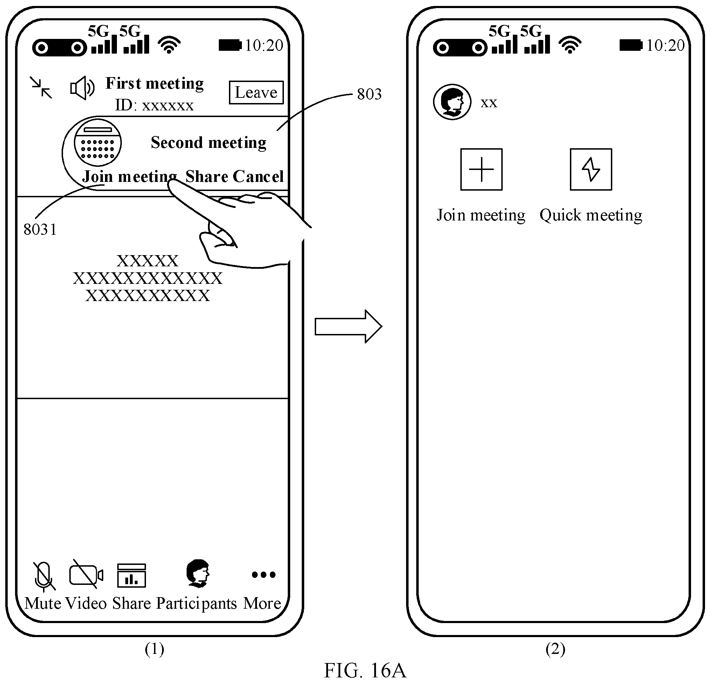

Still in the application scenario shown in FIG. 14, as shown in (1) in FIG. 16A, when the floating ball 803 corresponding to the "Second meeting" schedule reminder is in the unfolded state, if the user taps a "Join meeting" option 8031 on the floating ball 803, the interface of the terminal device switches to an application interface matching "Second meeting" in response to the operation of the user. Therefore, the user can quickly join the network meeting corresponding to "Second meeting" on an interface shown in (2) in FIG. 16A. This improves user experience and enables the user to quickly join the meeting.

Because the floating ball corresponding to the "Second meeting" schedule reminder is kept displayed on the terminal interface, the user can flexibly select an occasion for immediately joining the meeting, and immediately join the meeting based on a function option of the floating ball. Therefore, displaying of the floating ball corresponding to the "Second meeting" schedule reminder provides great convenience for operations of the user.

The meeting application interface shown in (2) in FIG. 16A is merely an example for demonstration. This is not limited in this embodiment of this application.

In an optional implementation, after the user taps the "Join meeting" option 8031, a display interface of the terminal device switches, and displaying of the floating ball 803 is also canceled. To be specific, tapping the "Join meeting" option by the user may trigger the floating ball to disappear. Tapping the "Join meeting" option by the user may be understood as that the user has handled the schedule. Therefore, the terminal device may cancel displaying of the floating ball corresponding to the schedule reminder, to avoid unnecessary displaying of the floating ball.

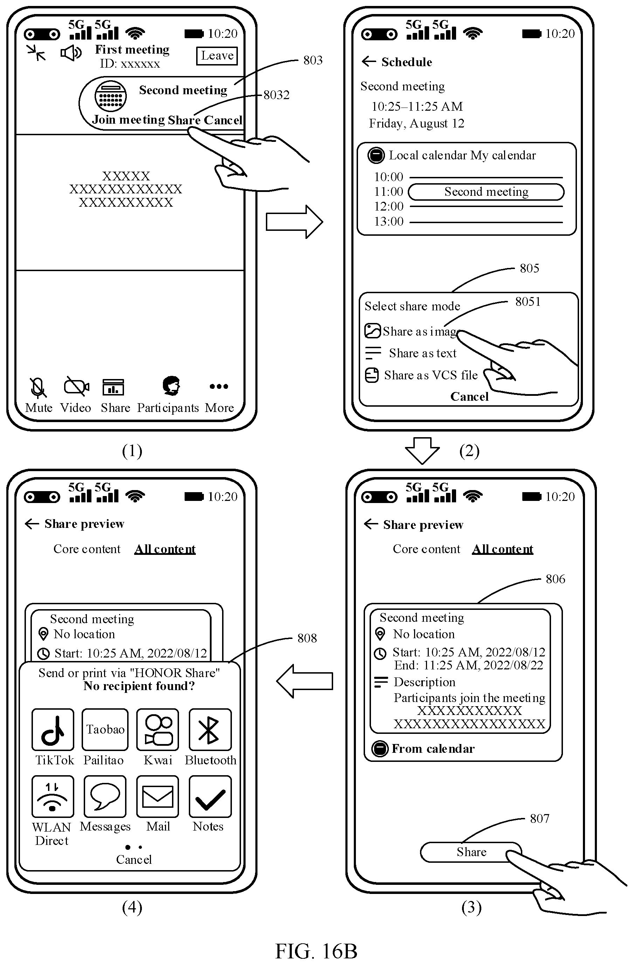

Still in the application scenario shown in FIG. 14, if the user cannot participate in the meeting and needs another person to participate in the meeting, the user may share the schedule to another user. As shown in (1) in FIG. 16B, when the floating ball 803 corresponding to the "Second meeting" schedule reminder is in the unfolded state, if the user taps a "Share" option 8032 on the floating ball 803, the interface of the terminal device switches to a schedule interface of Calendar in response to the operation of the user, as shown in (2) in FIG. 16B. Schedule information displayed on the interface shown in (2) in FIG. 16B is a schedule that corresponds to the floating ball 803 and for which a reminder needs to be provided for the user.

Still refer to (2) in FIG. 16B. A schedule share window 805 is further displayed on the interface of the terminal device. A plurality of sharing modes are displayed in the schedule share window 805. For example, the sharing modes include but are not limited to "Share as image", "Share as text", "Share as VCS file", and the like.

As shown in (2) in FIG. 16B, for example, when the user taps a "Share as image" option 8501 to share the schedule to another user by using an image, the terminal device may display an interface shown in (3) in FIG. 16B in response to the operation of the user. As shown in (3) in FIG. 16B, a schedule image 806 is displayed on a sharing preview interface. In this case, the user may tap a Share option 807, and the terminal device displays a share window 808 in response to the operation of the user. For example, the share window 808 may display icons of a plurality of share objects. The icons may include icons of other APPs installed on the terminal device, including but not limited to an icon of a TikTok APP, an icon of a Pailitao APP, an icon of a Kwai APP, an icon of a Bluetooth APP, an icon of a WLAN Direct APP, an icon of a Messages APP, an icon of a Mail APP, an icon of a Notes APP, and the like. Further, the user may tap and select an object to share as needed, and then share a schedule image.

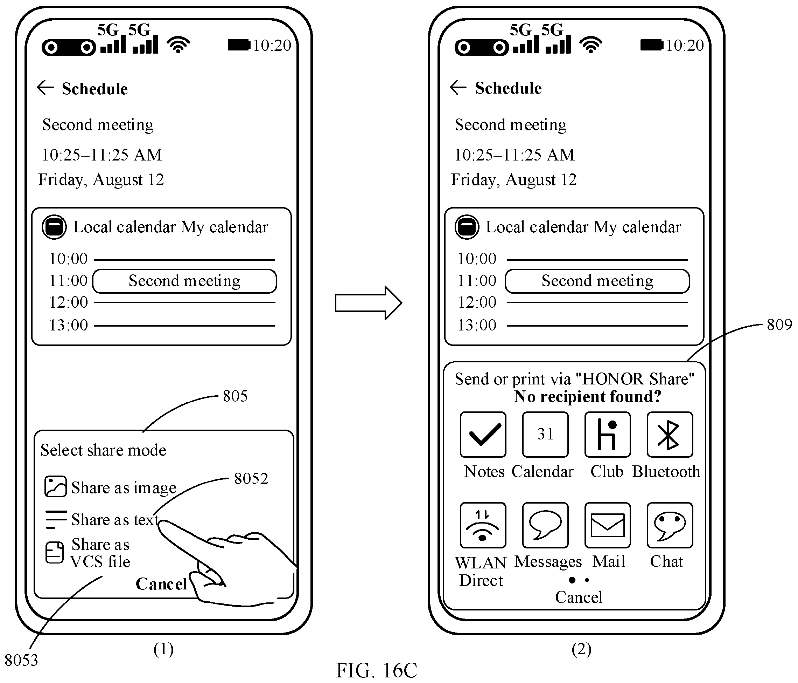

As shown in (1) in FIG. 16C, for example, when the user taps a "Share as text" option 8502 to share the schedule to another user by using text, or when the user taps a "Share as VCS file" option 8053 to share the schedule to another user by using a VCS file, the terminal device may display an interface shown in (2) in FIG. 16C in response to the operation of the user. As shown in (2) in FIG. 16C, a share window 809 is displayed on the interface. For example, the share window 809 may display icons of a plurality of share objects. The icons may include icons of other APPs installed on the terminal device, including but not limited to an icon of a Notes APP, an icon of a Calendar APP, an icon of a Club APP, an icon of a Bluetooth APP, an icon of a WLAN Direct APP, an icon of a Messages APP, an icon of a Mail APP, an icon of a Chat APP, and the like. Further, the user may tap and select an object to share as needed, and then share a schedule image.

It should be noted that the APPs supporting sharing in the share window 808 may be the same or different from those in the share window 809. This is not limited in this embodiment of this application.

In this way, the terminal device pulls up a share window through an operation performed by the user on a share option on a floating ball, and share a schedule to a target object selected by the user. This implements schedule sharing and enriches functions of the terminal. Compared with a process in which the user actively finds a schedule and then shares the schedule, the method in which schedule sharing is implemented by directly pulling up a share window through an operation on a share option on a floating ball in this embodiment makes operations more convenient and faster, improves efficiency of resource sharing, and improves user experience.

In an optional implementation, after the user taps the "Share" option 8032, a display interface of the terminal device switches, and displaying of the floating ball 803 is also canceled. To be specific, tapping the "Share" option by the user may trigger the floating ball to disappear. Tapping the "Share" option by the user may be understood as that the user has handled the schedule. Therefore, the terminal device may cancel displaying of the floating ball corresponding to the schedule reminder, to avoid unnecessary displaying of the floating ball.

In another optional implementation, tapping the "Share" option by the user does not trigger the floating ball to disappear. For example, after the user taps the "Share" option 8032, a display interface of the terminal device switches, and displaying of the floating ball 803 is also canceled. When the user completes a schedule sharing operation and returns to an interface that exists before the schedule is shared, the floating ball 803 continues to be displayed. Although tapping the "Share" option by the user may be understood as that the user has handled the schedule, the user may alternatively need to continue to participate in the meeting. Therefore, the terminal device may continue to display the floating ball corresponding to the schedule reminder, to provide operation convenience for the user.

Still in the application scenario shown in FIG. 14, if the user does not need the terminal device to provide the "Second meeting" schedule reminder for the user, the user may cancel displaying of the floating ball corresponding to the "Second meeting" schedule reminder.

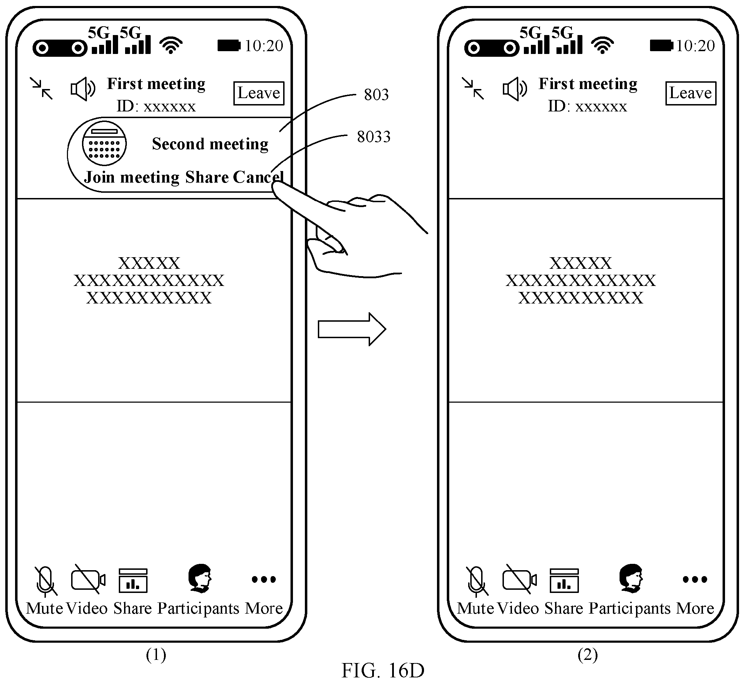

As shown in (1) in FIG. 16D, when the floating ball 803 corresponding to the "Second meeting" schedule reminder is in the unfolded state, if the user taps a "Cancel" option 8033 on the floating ball 803, displaying of the floating ball 803 on the interface of the terminal device is canceled in response to the operation of the user. Refer to (2) in FIG. 16D.

In addition, it should be further noted that, if a schedule corresponding to a floating ball expires (or referred to as that the schedule ends), the terminal device cancels displaying of the floating ball corresponding to the schedule reminder. To be specific, the terminal device determines whether current time reaches end time of a schedule, and cancels displaying of a floating ball corresponding to the schedule reminder if the current time reaches the end time of the schedule.

In this way, a floating ball corresponding to a schedule reminder is displayed at the top of an interface of the terminal device, so that the user can choose to immediately handle the schedule, share the schedule, or close the schedule reminder based on an actual situation of the user, without affecting a current interface task of the user. The floating ball does not automatically disappear on a display interface of the terminal device, so that a real-time reminder can be provided for the user when the user uses the terminal device.

In the foregoing embodiments, displaying of a floating ball corresponding to a meeting schedule reminder is used as an example for description. The same is true for schedule reminders of other types, and details are not described herein again. For example, schedules of other types may be an entertainment schedule and a ticket booking schedule. Terminal applications corresponding to different schedules are not necessarily the same.

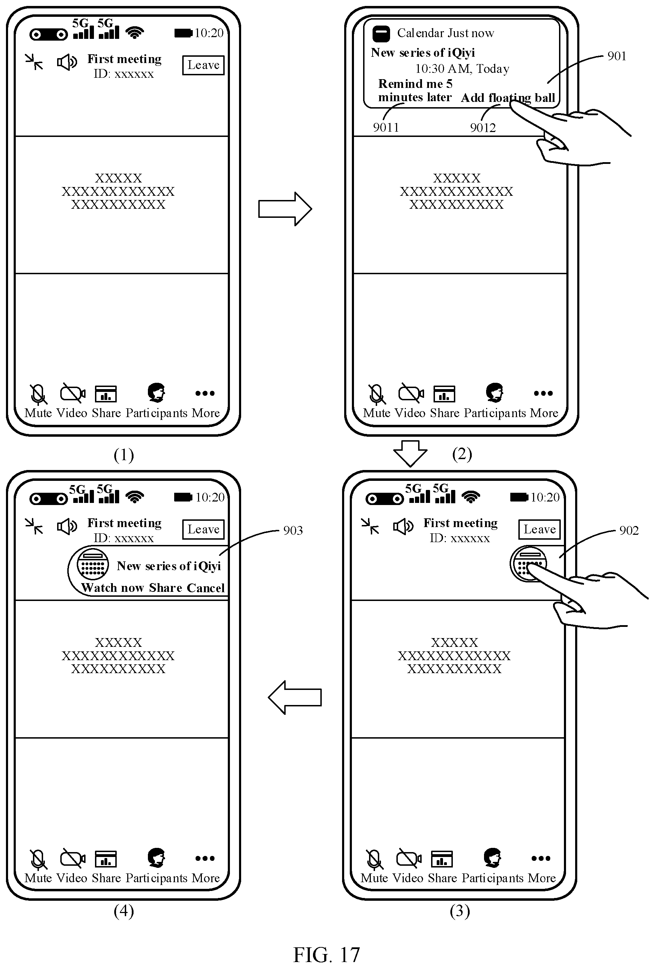

In a possible application scenario, a user pre-creates a schedule named "New series of iQiyi". The user participates in a network meeting by using a terminal device, and the terminal device displays a network meeting interface. Refer to (1) in FIG. 17. In a process in which the user participates in the network meeting, it is assumed that the terminal device displays a banner notification 901 to perform a schedule reminder for the user. The schedule reminder corresponding to the banner notification 901 is preset by the user, and is used for reminding the user to watch new series of iQiyi at 10:30 AM today. In the schedule reminder, a schedule name is "New series of iQiyi", and schedule start time is 10:30 AM.

As shown in (2) in FIG. 17, the schedule name and the schedule start time are displayed in the banner notification 901, and a "Remind me 5 minutes later" option 9011 and an "Add floating ball" option 9012 are further displayed in the banner notification 901. The user may perform an operation on the "Remind me 5 minutes later" option 9011 or the "Add floating ball" option 9012 in the banner notification 901.

Still refer to (2) in FIG. 17. If the user taps the "Add floating ball" option 9012, the terminal device cancels displaying of the banner notification 901 in response to the operation of the user. In addition, a floating ball 902 corresponding to the schedule reminder is displayed on an interface of the terminal device. Refer to (3) in FIG. 17. In this embodiment, the floating ball 902 is used for guiding the user to perform an operation related to the "New series of iQiyi" schedule reminder. Tapping the "Add floating ball" option 9012 by the user may trigger the terminal device to perform a schedule reminder for the user again five minutes later, or may not trigger the terminal device to perform a schedule reminder for the user again five minutes later. This is not limited in this embodiment.

Still refer to (3) in FIG. 17. An initial form in which the floating ball 902 corresponding to the "New series of iQiyi" schedule reminder is displayed is a folded state. If the user taps the floating ball 902 corresponding to the "New series of iQiyi" schedule reminder, the floating ball 902 corresponding to the "New series of iQiyi" schedule reminder changes to an unfolded state. Refer to a floating ball 903 corresponding to the "New series of iQiyi" schedule reminder in (4) in FIG. 17. For example, as shown in (4) in FIG. 17, function options displayed on the floating ball in the unfolded state may include but are not limited to a "Watch now" option, a "Share" option, a "Cancel" option, and the like, to guide the user to perform an operation corresponding to the "New series of iQiyi" schedule reminder. The "Watch now" option is used for guiding the user to watch new series in a corresponding APP. The "Share" option is used for the user to share the "New series of iQiyi" schedule. The "Cancel" option is used for the user to cancel displaying of the floating ball corresponding to the "New series of iQiyi" schedule reminder. For example, when the user taps the "Watch now" option, the interface of the terminal device switches to an interface of a corresponding APP, so that the user can immediately watch a corresponding episode, and displaying of the floating ball corresponding to the "New series of iQiyi" schedule reminder is also canceled.

It should be noted that tapping the "Share" option by the user may trigger the floating ball corresponding to the "New series of iQiyi" schedule reminder to disappear, or may not trigger the floating ball corresponding to the "New series of iQiyi" schedule reminder to disappear. This is not limited in this embodiment.

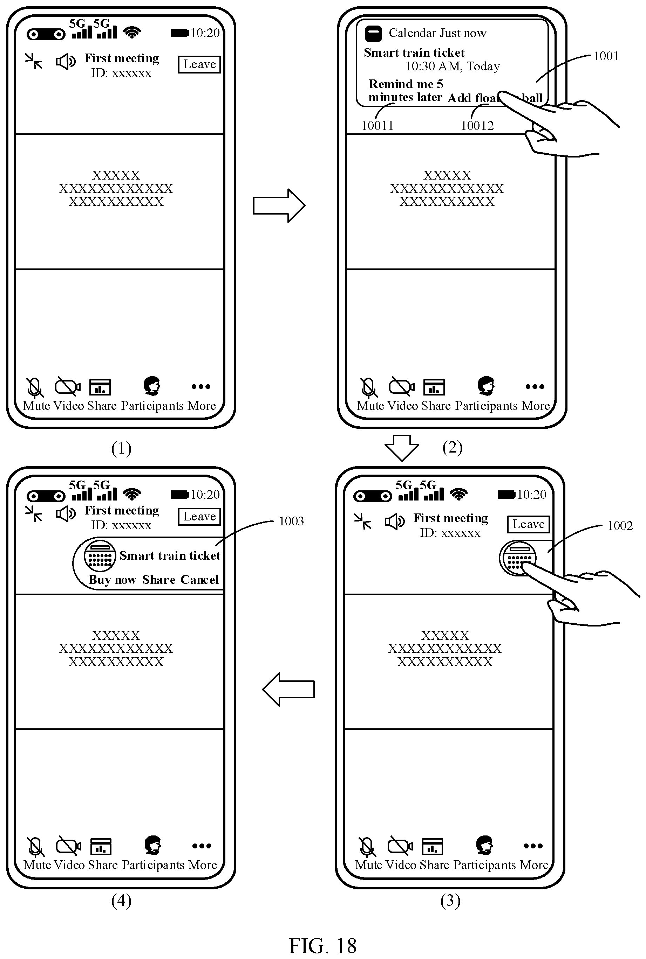

In a possible application scenario, a user pre-creates a schedule named "Smart train ticket". The user participates in a network meeting by using a terminal device, and the terminal device displays a network meeting interface. Refer to (1) in FIG. 18. In a process in which the user participates in the network meeting, it is assumed that the terminal device displays a banner notification 1001 to perform a schedule reminder for the user. The schedule reminder corresponding to the banner notification 1001 is preset by the user, and is used for reminding the user to buy a train ticket at 10:30 AM today. In the schedule reminder, a schedule name is "Smart train ticket", and schedule start time is 10:30 AM.

As shown in (2) in FIG. 18, the schedule name and the schedule start time are displayed in the banner notification 1001, and a "Remind me 5 minutes later" option 10011 and an "Add floating ball" option 10012 are further displayed in the banner notification 1001. The user may perform an operation on the "Remind me 5 minutes later" option 10011 or the "Add floating ball" option 10012 in the banner notification 1001.

Still refer to (2) in FIG. 18. If the user taps the "Add floating ball" option 10012, the terminal device cancels displaying of the banner notification 1001 in response to the operation of the user. In addition, a floating ball 1002 corresponding to the schedule reminder is displayed on an interface of the terminal device. Refer to (3) in FIG. 18. In this embodiment, the floating ball 1002 is used for guiding the user to perform an operation related to the "Smart train ticket" schedule reminder. Tapping the "Add floating ball" option 10012 by the user may trigger the terminal device to perform a schedule reminder for the user again five minutes later, or may not trigger the terminal device to perform a schedule reminder for the user again five minutes later. This is not limited in this embodiment.

Still refer to (3) in FIG. 18. An initial form in which the floating ball 1002 corresponding to the "Smart train ticket" schedule reminder is displayed is a folded state. If the user taps the floating ball 1002 corresponding to the "Smart train ticket" schedule reminder, the floating ball 1002 corresponding to the "Smart train ticket" schedule reminder changes to an unfolded state. Refer to a floating ball 1003 corresponding to the "Smart train ticket" schedule reminder in (4) in FIG. 18. For example, as shown in (4) in FIG. 18, function options displayed on the floating ball in the unfolded state may include but are not limited to a "Buy now" option, a "Share" option, a "Cancel" option, and the like, to guide the user to perform an operation corresponding to the "Smart train ticket" schedule reminder. The "Buy now" option is used for guiding the user to buy a train ticket in a corresponding APP. The "Share" option is used for the user to share the "Smart train ticket" schedule. The "Cancel" option is used for the user to cancel displaying of the floating ball corresponding to the "Smart train ticket" schedule reminder. For example, when the user taps the "Buy now" option, the interface of the terminal device switches to an interface of a corresponding APP, so that the user can immediately perform an operation of buying a train ticket, and displaying of the floating ball corresponding to the "Smart train ticket" schedule reminder is also canceled.

It should be noted that tapping the "Share" option by the user may trigger the floating ball corresponding to the "Smart train ticket" schedule reminder to disappear, or may not trigger the floating ball corresponding to the "Smart train ticket" schedule reminder to disappear. This is not limited in this embodiment.

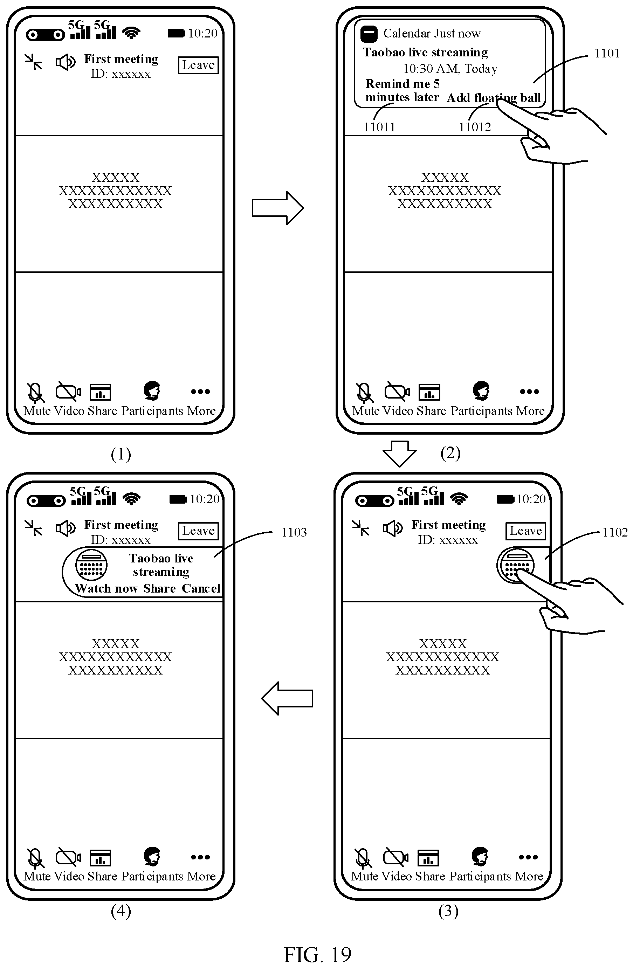

In a possible application scenario, a user pre-creates a schedule named "Taobao live streaming". The user participates in a network meeting by using a terminal device, and the terminal device displays a network meeting interface. Refer to (1) in FIG. 19. In a process in which the user participates in the network meeting, it is assumed that the terminal device displays a banner notification 1101 to perform a schedule reminder for the user. The schedule reminder corresponding to the banner notification 1101 is preset by the user, and is used for reminding the user to watch Taobao live streaming at 10:30 AM today. In the schedule reminder, a schedule name is "Taobao live streaming", and schedule start time is 10:30 AM.

As shown in (2) in FIG. 19, the schedule name and the schedule start time are displayed in the banner notification 1101, and a "Remind me 5 minutes later" option 11011 and an "Add floating ball" option 11012 are further displayed in the banner notification 1101. The user may perform an operation on the "Remind me 5 minutes later" option 11011 or the "Add floating ball" option 11012 in the banner notification 1101.

Still refer to (2) in FIG. 19. If the user taps the "Add floating ball" option 11012, the terminal device cancels displaying of the banner notification 1101 in response to the operation of the user. In addition, a floating ball 1102 corresponding to the schedule reminder is displayed on an interface of the terminal device. Refer to (3) in FIG. 19. In this embodiment, the floating ball 1102 is used for guiding the user to perform an operation related to the "Taobao live streaming" schedule reminder. Tapping the "Add floating ball" option 11012 by the user may trigger the terminal device to perform a schedule reminder for the user again five minutes later, or may not trigger the terminal device to perform a schedule reminder for the user again five minutes later. This is not limited in this embodiment.

Still refer to (3) in FIG. 19. An initial form in which the floating ball 1102 corresponding to the "Taobao live streaming" schedule reminder is displayed is a folded state. If the user taps the floating ball 1102 corresponding to the "Taobao live streaming" schedule reminder, the floating ball 1102 corresponding to the "Taobao live streaming" schedule reminder changes to an unfolded state. Refer to a floating ball 1103 corresponding to the "Taobao live streaming" schedule reminder in (4) in FIG. 19. For example, as shown in (4) in FIG. 19, function options displayed on the floating ball in the unfolded state may include but are not limited to a "Watch now" option, a "Share" option, a "Cancel" option, and the like, to guide the user to perform an operation corresponding to the "Taobao live streaming" schedule reminder. The "Watch now" option is used for guiding the user to watch live streaming in a corresponding APP. The "Share" option is used for the user to share the "Taobao live streaming" schedule. The "Cancel" option is used for the user to cancel displaying of the floating ball corresponding to the "Taobao live streaming" schedule reminder. For example, when the user taps the "Watch now" option, the interface of the terminal device switches to an interface of a corresponding APP, so that the user can immediately watch corresponding live streaming, and displaying of the floating ball corresponding to the "Taobao live streaming" schedule reminder is also canceled.

It should be noted that tapping the "Share" option by the user may trigger the floating ball corresponding to the "Taobao live streaming" schedule reminder to disappear, or may not trigger the floating ball corresponding to the "Taobao live streaming" schedule reminder to disappear. This is not limited in this embodiment.

The foregoing application scenarios are merely examples for description. It can be understood that a floating ball corresponding to a schedule reminder may alternatively be applied to other schedule reminder scenarios. This is not specifically limited in embodiments of this application.

An embodiment further provides a computer storage medium. The computer storage medium stores computer instructions. When the computer instructions are run on an electronic device, the electronic device is enabled to perform the foregoing related method steps, to implement the task processing-based reminder method in the foregoing embodiments.

An embodiment further provides a computer program product. When the computer program product is run on a computer, the computer is enabled to perform the foregoing related steps, to implement the task processing-based reminder method in the foregoing embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, so that the chip performs the task processing-based reminder method in the foregoing method embodiments.

The electronic device (for example, a mobile phone), the computer storage medium, the computer program product, or the chip provided in the embodiments is configured to perform the corresponding method provided above. Therefore, for beneficial effects that can be achieved, refer to the beneficial effects of the corresponding method provided above. Details are not described herein again.

Based on the descriptions of the foregoing implementations, a person skilled in the art may understand that, for a purpose of convenient and brief description, division into the foregoing functional modules is merely used as an example for illustration. During actual application, the foregoing functions may be allocated to different functional modules and implemented according to a requirement. In other words, an inner structure of the apparatus is divided into different functional modules to implement all or some of the functions described above.

In the several embodiments provided in this application, it should be understood that the disclosed system, apparatus, and method may be implemented in other manners. For example, the described apparatus embodiment is merely an example. For example, the module or unit division is merely logical function division, and there may be another division in actual implementation. For example, a plurality of units or components may be combined or integrated into another apparatus, or some features may be ignored or not performed. In addition, the shown or discussed mutual couplings or direct couplings or communication connections may be implemented through some interfaces. The indirect couplings or communication connections between the apparatuses or units may be implemented in electrical, mechanical, or other forms.

The foregoing embodiments are merely intended for describing the technical solution of this application, but not for limiting this application. Although this application is described in detail with reference to the foregoing embodiments, a person of ordinary skill in the art should understand that modifications may still be made to the technical solutions described in the foregoing embodiments, or equivalent replacements may be made to the part of the technical features, and these modifications or replacements do not cause the essence of corresponding technical solutions to depart from the scope of the technical solutions in embodiments of this application.

## Claims

1. A task-based reminder method, comprising:
displaying a first interface, wherein the first interface comprises a received first file;
receiving a first operation performed on the first interface, wherein the first operation is used for downloading the first file;
displaying a second interface when downloading of the first file is completed, wherein the second interface comprises a preview interface of the first file and a first floating window, and the first floating window comprises a first option;
storing the first file in a directory of a target folder in response to a second operation performed on the first option, wherein the target folder is a folder with a custom permission, and the target folder is different from a system folder;
displaying a third interface, wherein the third interface is an interface of a file management application, and the third interface comprises the target folder and the system folder; and
displaying the first file in the target file in response to a third operation performed on the target folder.

2. The method according to claim 1, further comprising:
closing the preview interface of the first file in response to a fourth operation performed on the preview interface of the first file, and canceling displaying of the first floating window.

3. The method according to claim 2, wherein after the canceling displaying of the first floating window, the method further comprises:
displaying a fourth interface in response to a fifth operation performed on the first file, wherein the fourth interface comprises the preview interface of the first file and the first floating window.

4. The method according to claim 1, wherein the first floating window is a first floating ball.

5. The method according to claim 4, wherein an initial form of the first floating ball is a folded state; and
the method further comprises:
adjusting a form of the first floating ball to an unfolded state in response to a sixth operation performed on the first floating ball, wherein when the first floating ball is in the unfolded state, the first option is displayed on the first floating ball.

6. The method according to claim 5, further comprising:
adjusting a form of the first floating ball from the unfolded state to the folded state in response to a seventh operation performed on the first floating ball, or a received eighth operation, or no user operation being received within specified time.

7. The method according to any one of claims 1 to 6, wherein the first floating window further comprises a second option; and
the method further comprises:
displaying a fifth interface in response to an eighth operation performed on the second option, wherein the fifth interface comprises the preview interface of the first file and a first share window, the first share window comprises icons of a plurality of share objects, and the icons of the plurality of share objects comprise an icon of a first object; and
sending the first file to the first object in response to a received ninth operation.

8. The method according to any one of claims 1 to 6, wherein the first floating window further comprises a third option; and
the method further comprises:
displaying a sixth interface in response to a ninth operation performed on the third option, wherein the sixth interface comprises a print preview interface of the first file and a print option; and
in response to a tenth operation performed on the print option, sending, to a printing device, an instruction for printing the first file.

9. The method according to any one of claims 1 to 6, wherein the first floating window further comprises a fourth option; and
the method further comprises:
displaying a seventh interface in response to a tenth operation performed on the fourth option, wherein the seventh interface comprises the preview interface of the first file and prompt information, and the prompt information is used for indicating that the first file has been stored to a desktop card;
displaying a desktop in response to a received eleventh operation, wherein the desktop comprises a desktop card, and the desktop card comprises an icon control of the first file; and
displaying the preview interface of the first file in response to a twelfth operation performed on the icon control of the first file.

10. The method according to any one of claims 1 to 6, wherein the first interface is an interface of a third-party application.

11. The method according to any one of claims 1 to 6, further comprising:
displaying an eighth interface, wherein the eighth interface comprises a schedule reminder notification, and the schedule reminder notification comprises schedule information and a fifth option;
in response to a thirteenth operation performed on the fifth option, canceling displaying of the schedule reminder notification, and displaying a second floating window, wherein the second floating window comprises a sixth option; and
displaying a ninth interface in response to a fourteenth operation performed on the sixth option, wherein the ninth interface is used for performing an item matching the schedule information.

12. The method according to claim 11, further comprising:
canceling displaying of the second floating window in response to the fourteenth operation performed on the sixth option.

13. The method according to claim 11, wherein the second floating window comprises a seventh option; and
the method further comprises:
displaying a tenth interface in response to a fifteenth operation performed on the seventh option, wherein the tenth interface comprises the schedule information and a second share window, the second share window comprises icons of a plurality of share objects, and the icons of the plurality of share objects comprise an icon of a second object; and
sending the schedule information to the second object in response to a received sixteenth operation.

14. The method according to claim 13, further comprising:
canceling displaying of the second floating window in response to the fifteenth operation performed on the seventh option.

15. The method according to claim 13, further comprising:
canceling displaying of the second floating window in response to the fifteenth operation performed on the seventh option; and
continuing to display the second floating window after the schedule information is sent to the second object.

16. The method according to claim 11, wherein the second floating window comprises an eighth option; and
the method further comprises:
canceling displaying of the second floating window in response to a sixteenth operation performed on the eighth option.

17. The method according to claim 11, wherein the schedule reminder notification comprises schedule reminder information displayed in a form of an alarm clock, schedule reminder information displayed in a form of a banner notification, and schedule notification information displayed in a notification center or on a lock screen interface.

18. The method according to claim 11, wherein the schedule information comprises:
meeting schedule information, entertainment schedule information, and transaction schedule information.

19. The method according to claim 11, wherein the second floating window is a second floating ball, and an initial form of the second floating ball is a folded state; and
the method further comprises:
adjusting a form of the second floating ball to an unfolded state in response to a seventeenth operation performed on the second floating ball, wherein when the second floating ball is in the unfolded state, the sixth option is displayed on the first floating ball.

20. The method according to claim 11, further comprising:
in response to the thirteenth operation performed on the fifth option, setting a schedule reminder to be performed again N minutes later, wherein N is a positive integer.

21. An electronic device, comprising:
one or more processors;
a memory; and
one or more computer programs, wherein the one or more computer programs are stored in the memory, and when the computer program is executed by the one or more processors, the electronic device is enabled to perform the task-based reminder method according to any one of claims 1 to 20.

22. A computer-readable storage medium, comprising a computer program, wherein when the computer program is run on an electronic device, the electronic device is enabled to perform the task-based reminder method according to any one of claims 1 to 20.
